# EUROPEAN PATENT SPECIFICATION

(11) **EP 4 533 269 B1**
(45) Date of publication and mention of the grant of the patent: **29.04.2026**
(21) Application number: 23731119.6
(22) Date of filing: 26.05.2023
(51) Int. Cl.: G06F 11/3668

(54) **IDENTIFYING SALIENT TEST RUNS INVOLVING MOBILE ROBOT TRAJECTORY PLANNERS**
IDENTIFIZIERUNG VON HERVORSTECHENDEN TESTLÄUFEN MIT BEWEGUNGSPLANERN FÜR MOBILEN ROBOTER
IDENTIFICATION DE CYCLES DE TEST SAILLANTS IMPLIQUANT DES PLANIFICATEURS DE TRAJECTOIRE DE ROBOT MOBILE

(30) Priority: 27.05.2022 GB 202207860
(43) Date of publication of application: 09.04.2025
(73) Proprietor: Five AI Limited, Cambridge CB1 2JH (GB)
(72) Inventor: MORRIELLO, Maurizio, Cambridge CB1 2JH (GB); FERRI, Marco, Cambridge CB1 2JH (GB)
(74) Representative: Page White Farrer
(86) International application number: PCT/EP2023/064247
(87) International publication number: WO 2023/227776

(56) References cited:
- DE-A1- 102020 130 748

## Description

### Technical Field

The present disclosure pertains to methods for identifying salient test runs involving trajectory planners in real or simulated scenarios, and computer programs and systems for implementing the same. Such planners are capable of autonomously planning ego trajectories for fully/semi-autonomous vehicles or other forms of mobile robot. Example applications include ADS (Autonomous Driving System) and ADAS (Advanced Driver Assist System) performance testing.

### Background

There have been major and rapid developments in the field of autonomous vehicles. An autonomous vehicle (AV) is a vehicle which is equipped with sensors and control systems which enable it to operate without a human controlling its behaviour. An autonomous vehicle is equipped with sensors which enable it to perceive its physical environment, such sensors including for example cameras, radar and lidar. Autonomous vehicles are equipped with suitably programmed computers which are capable of processing data received from the sensors and making safe and predictable decisions based on the context which has been perceived by the sensors. An autonomous vehicle may be fully autonomous (in that it is designed to operate with no human supervision or intervention, at least in certain circumstances) or semi-autonomous. Semi-autonomous systems require varying levels of human oversight and intervention. An Advanced Driver Assist System (ADAS) and certain levels of Autonomous Driving System (ADS) may be classed as semi-autonomous. There are different facets to testing the behaviour of the sensors and control systems aboard a particular autonomous vehicle, or a type of autonomous vehicle.

A "level 5" vehicle is one that can operate entirely autonomously in any circumstances, because it is always guaranteed to meet some minimum level of safety. Such a vehicle would not require manual controls (steering wheel, pedals etc.) at all.

By contrast, level 3 and level 4 vehicles can operate fully autonomously but only within certain defined circumstances (e.g. within geofenced areas). A level 3 vehicle must be equipped to autonomously handle any situation that requires an immediate response (such as emergency braking); however, a change in circumstances may trigger a "transition demand", requiring a driver to take control of the vehicle within some limited timeframe. A level 4 vehicle has similar limitations; however, in the event the driver does not respond within the required timeframe, a level 4 vehicle must also be capable of autonomously implementing a "minimum risk maneuver" (MRM), i.e. some appropriate action(s) to bring the vehicle to safe conditions (e.g. slowing down and parking the vehicle). A level 2 vehicle requires the driver to be ready to intervene at any time, and it is the responsibility of the driver to intervene if the autonomous systems fail to respond properly at any time. With level 2 automation, it is the responsibility of the driver to determine when their intervention is required; for level 3 and level 4, this responsibility shifts to the vehicle's autonomous systems and it is the vehicle that must alert the driver when intervention is required.

Safety is an increasing challenge as the level of autonomy increases and more responsibility shifts from human to machine. In autonomous driving, the importance of guaranteed safety has been recognized. Guaranteed safety does not necessarily imply zero accidents, but rather means guaranteeing that some minimum level of safety is met in defined circumstances. It is generally assumed this minimum level of safety must significantly exceed that of human drivers for autonomous driving to be viable.

DE102020130748A1 discloses a method, system and a computer program for generating a virtual environment of a vehicle. The virtual environment simulates salient test runs using data slices that represent manoeuvres of a challenger agent.

According to Shalev-Shwartz et al. "On a Formal Model of Safe and Scalable Self-driving Cars" (2017), arXiv:1708.06374 (the RSS Paper), human driving is estimated to cause of the order 10⁻⁶ severe accidents per hour. On the assumption that autonomous driving systems will need to reduce this by at least three order of magnitude, the RSS Paper concludes that a minimum safety level of the order of 10⁻⁹ severe accidents per hour needs to be guaranteed, noting that a pure data-driven approach would therefore require vast quantities of driving data to be collected every time a change is made to the software or hardware of the AV system.

The RSS paper provides a model-based approach to guaranteed safety. A rule-based Responsibility-Sensitive Safety (RSS) model is constructed by formalizing a small number of "common sense" driving rules:
"1. Do not hit someone from behind.
2. Do not cut-in recklessly.
3. Right-of-way is given, not taken.
4. Be careful of areas with limited visibility.
5. If you can avoid an accident without causing another one, you must do it."

The RSS model is presented as provably safe, in the sense that, if all agents were to adhere to the rules of the RSS model at all times, no accidents would occur. The aim is to reduce, by several orders of magnitude, the amount of driving data that needs to be collected in order to demonstrate the required safety level.

A safety model (such as RSS) can be used as a basis for evaluating the quality of trajectories that are planned or realized by an ego agent in a real or simulated scenario under the control of an autonomous system (stack). The stack is tested by exposing it to different scenarios, and evaluating the resulting ego trajectories for compliance with rules of the safety model (rules-based testing). A rules-based testing approach can also be applied to other facets of performance, such as comfort or progress towards a defined goal.

Even when rules-based testing is employed, there is still a need to expose the stack to a large range of scenarios, covering a large number of test miles. Given the number of test miles typically required, it is not generally practical to rely on real scenarios alone, and so the majority of the testing carried out is in the form of simulated scenarios.

Whether real or simulated, the scenarios (or each "run" through the scenario) will vary in terms of their saliency in testing the stack. Saliency in this context may refer to the usefulness of a scenario or the run therethrough in terms of the testing of stacks. For example, some scenarios will involve the ego agent driving in relatively routine situations, such as on quiet roads or along routes with comparatively straightforward road layouts, and thus not be particularly salient. Other scenarios will present more challenging situations, for example with heavier traffic, unusual road layouts and unexpected behaviours of challenger agents, and thus be more salient.

It is desirable to identify salient scenarios, for example so that they can be reused in future tests in preference to less salient scenarios, saving compute resource running scenarios that provide a less meaningful assessment of the performance of the ego agent. However, it may not be apparent at the outset in a simulated environment whether a run through a particular scenario will be salient. For real scenarios, it is impossible to know how the scenario will unfold in advance.

Once a run is complete, manually reviewing the data generated from the run (hereinafter "run data") to determine its saliency is not feasible, given the large number simulated runs carried out during testing and the associated volume of run data. This is compounded by the fact that the salient part of a run may be only a small part of the total run.

It is an aim of the disclosure to address the difficulties discussed above, and any other difficulties that would be apparent to the skilled reader from the description herein.

### Summary

According to a first aspect of the disclosure, there is provided a computer system for identifying salient test runs involving an autonomous vehicle system in real or simulated scenarios, the computer system comprising:
a processor configured to:
   receive multiple sets of run data, each set of run data representative of a driving scenario having an ego agent and at least one challenger agent with the autonomous vehicle system in control of the ego agent,
   generate, for each set of run data, an output set comprising:
      at least one time-indexed event generated responsive to a detected behaviour of the at least one challenger agent,
   a sequence of decision indicators over multiple time steps of the run data, the decision indicator at each time step indicating whether a predefined driving action by the ego agent would be permissible, each driving indicator generated independently of the autonomous vehicle system in control of the ego agent, and
a data retrieval component coupled to the results database and configured to retrieve a collection of one or more output sets, based on the at least one time-indexed event and the sequence of decision indicators;
wherein the processor is configured to generate the sequence of decision indicators by:
   generating a planned trajectory based on a position of the ego agent at a time step to a future time step, the planned trajectory independent of the behaviour of the ego agent between the time step and the future time step, and
   determining whether the predefined driving action by the ego agent would be permissible by assessing the planned trajectory based on at least one predefined action assessment rule.

The system may process run data to identify and store the occurrence of two relevant circumstances: particular behaviours of challenger agents (e.g. a cut-in ahead of the ego agent), and whether the ego agent is permitted to carry out a driving action (e.g. a lane change) according to a reference driving model. The presence of both these relevant circumstances (e.g. a challenger agent has cut-in ahead where a lane change is not permitted) can be indicative of a salient scenario. Accordingly, such instances can be retrieved from a large volume of run data.

The processor may be further configured to generate at least one performance result on a predefined driving performance rule applied to the ego agent and include the at least one performance result in the output set. Accordingly, the processor may form part of a test oracle.

The system may comprise a visualisation component configured to generate rendering data for causing a display system to display a query graphical user interface, GUI. The query GUI may comprise an input configured to receive a user selection of the at least one time-indexed event and the decision indicator. The data retrieval component may be configured to retrieve the collection of one or more output sets based on the user selection of the at least one time-indexed event and the decision indicator.

The system may comprise a visualisation component configured to generate rendering data for causing a display system to display a results GUI comprising the collection of one or more output sets.

The system may comprise a visualisation component configured to generate rendering data for causing a display system to display an output set GUI. The output set GUI may be configured to display a selected output set from the collection of output sets. The output set GUI may comprise a first time-series display element showing the time-indexed event in the selected output set on a first timeline. The output set GUI may comprise a second time-series display element showing the permissibility of the driving action represented by the decision indicators in the selected output set on a second timeline. The output set GUI may comprise a third time-series display element showing the at least one performance result on a third timeline.

The data retrieval component may be configured to retrieve a collection of one or more output sets in which the time-indexed event occurs within a predetermined time range of a decision indicator having a predetermined value. The time-indexed event may occur simultaneously with the decision indicator having the predetermined value.

The at least one time-indexed event may comprise, for example, of a cut-in event, a cut-out event, or a braking event. Each time-indexed event may be associated with a plurality of parameters.

A cut-in event may occur when another agent, such as the challenger agent, ahead of the ego agent, moves into the ego agent's lane and decelerates. This may constitutes a hazard for ego to avoid. Parameters of a cut-in event can include one or more of: a longitudinal distance from the ego agent to the challenger agent at the start of the cut in, a challenger agent speed prior to cut in, and a challenger agent lateral velocity during lane change.

A cut-out event may occur when a first challenger agent, ahead of the ego agent and in the ego agents's lane, moves into an adjacent lane and reveals a second challenger agent that is slow or stationary in front of it. The second challenger agent may constitute a hazard for the ego agent to avoid. Parameters of a cut-out event can include one or more of: a longitudinal distance from the first challenger agent to the second challenger agent at the start of the cut-out; the first challenger agent lateral offset from lane centre; the second challenger agent lateral offset from lane centre; first challenger agent lateral offset from lane centre after lane change; the second challenger agent speed after the cut-out; the first challenger agent lateral velocity during lance change; and the first challenger agent speed prior to cut-out.

A braking event occurs when another agent, such as the challenger agent, ahead of the ego agent, and in the ego agent's lane, suddenly brakes. The other agent may constitute a hazard for the ego agent to avoid. Parameters of a braking event can include one or more of: the challenger agent speed after deceleration, the maximum rate of deceleration by the challenger agent, and the maximum rate of jerk of the challenger agent.

The predefined driving action may comprise, for instance, one of a lane change action, a highway merge action, entry to a roundabout, an unprotected left turn or an unprotected right turn.

The data retrieval component may be configured to identify a section of a set of the run data comprising the time-indexed event and a decision indicator having a predetermined value.

The processor may be configured to generate the at least one time-indexed event by applying a plurality of conditions to behaviours of the challenger agent in the run data. The conditions may comprise constraints applied to one or more of the parameters of the event.

The predefined action assessment rule may form part of an open-loop rules-based planner or basic driver model.

The planned trajectory may comprise a single future state at the future time step. The processor may be configured to assessing the planned trajectory by assessing the single future state based on the at least one predefined action assessment rule.

According to a second aspect of the present disclosure, there is provided a computer-implemented method for identifying salient test runs in a real or simulated scenario, comprising:
receiving multiple sets of run data, each set of run data generated in a driving scenario having an ego agent and at least one challenger agent with the autonomous vehicle system in control of the ego agent,
generating, for each set of run data, at least one time-indexed event generated responsive to a detected behaviour of the at least one challenger agent;
generating, for each set of run data, a sequence of decision indicators over multiple time steps of the run data, the decision indicator at each time step indicating whether a predefined driving action by the ego agent would be permissible, each driving indicator generated independently of the autonomous vehicle system in control of the ego agent, by:
   generating a planned trajectory based on a position of the ego agent at a time step to a future time step, the planned trajectory independent of the behaviour of the ego agent between the time step and the future time step, and
   determining whether the predefined driving action by the ego agent would be permissible by assessing the planned trajectory based on at least one predefined driving action assessment rule; and
storing the output set in a results database.

The method may comprise further optional features, as defined herein in relation to the first aspect.

**In** other implementations, the output set may include at least one performance result as an alternative to the sequence of decision indicators.

In one such aspect, a computer system for identifying salient test runs involving an autonomous vehicle system in real or simulated scenarios, comprises
a processor configured to:
   receive multiple sets of run data, each set of run data representative of a driving scenario having an ego agent and at least one challenger agent with the autonomous vehicle system in control of the ego agent,
   generate, for each set of run data, an output set comprising:
      at least one time-indexed event generated responsive to a detected behaviour of the at least one challenger agent, and
      at least one performance result on a predefined driving performance rule applied to the ego agent
a data retrieval component coupled to the results database and configured to retrieve a collection of one or more output sets, based on the at least one time-indexed event and the at least one performance result.

Embodiments of the first and second aspects may equally be implemented in this context, with or without performance indicators.

The disclosure also provides a non-transitory computer-readable storage medium storing instructions which when executed by a computer carry out any of the methods discussed herein. The disclosure also provides a computer program comprising instructions which when executed by a computer carry out any of the methods discussed herein.

### Brief Description of Figures

For a better understanding of the present disclosure, and to show how embodiments of the same may be carried into effect, reference is made by way of example only to the following figures in which:
Figure 1A shows a schematic function block diagram of an autonomous vehicle stack;
Figure 1B shows a schematic overview of an autonomous vehicle testing paradigm;
Figure 1C shows a schematic block diagram of a scenario extraction pipeline;
Figure 2 shows a schematic block diagram of a testing pipeline;
Figure 2A shows further details of a possible implementation of the testing pipeline;
Figure 3A shows an example of a rule tree evaluated within a test oracle;
Figure 3B shows an example output of a node of a rule tree;
Figure 4A shows an example of a rule tree to be evaluated within a test oracle;
Figure 4B shows a second example of a rule tree evaluated on a set of scenario ground truth data;
Figure 4C shows how rules may be selectively applied within a test oracle;
Figure 5 shows a schematic block diagram of a visualization component for rendering a graphical user interface;
Figures 5A, 5B and 5C show different views available within a graphical user interface;
Figure 6A shows a first instance of a cut-in scenario;
Figure 6B shows an example oracle output for the first scenario instance;
Figure 6C shows a second instance of a cut-in scenario;
Figure 6D shows an example oracle output for the second scenario instance;
Figure 7 shows a schematic block diagram of an example computer system for identifying salient test runs;
Figure 8 shows a predefined driving action assessable by a decision indicator generator of the system of Figure 7;
Figure 9 shows an example query graphical user interface;
Figure 10 shows an example results graphical user interface;
Figure 11 shows an example graphical user interface illustrating a selected run with an event and decision indicator; and
Figure 12 is a schematic flowchart of an example method of identifying salient test runs.

### Detailed Description

The described embodiments relate to a testing pipeline to facilitate rules-based testing of mobile robot stacks in real or simulated scenarios. Agent (actor) behaviour in real or simulated scenarios is evaluated by a test oracle based on defined performance evaluation rules. Such rules may evaluate different facets of safety. For example, a safety rule set may be defined to assess the performance of the stack against a particular safety standard, regulation or safety model (such as RSS), or bespoke rule sets may be defined for testing any aspect of performance. The testing pipeline is not limited in its application to safety, and can be used to test any aspects of performance, such as comfort or progress towards some defined goal. A rule editor allows performance evaluation rules to be defined or modified and passed to the test oracle.

A "full" stack typically involves everything from processing and interpretation of low-level sensor data (perception), feeding into primary higher-level functions such as prediction and planning, as well as control logic to generate suitable control signals to implement planning-level decisions (e.g. to control braking, steering, acceleration etc.). For autonomous vehicles, level 3 stacks include some logic to implement transition demands and level 4 stacks additionally include some logic for implementing minimum risk maneuvers. The stack may also implement secondary control functions e.g. of signalling, headlights, windscreen wipers etc.

The term "stack" can also refer to individual sub-systems (sub-stacks) of the full stack, such as perception, prediction, planning or control stacks, which may be tested individually or in any desired combination. A stack can refer purely to software, i.e. one or more computer programs that can be executed on one or more general-purpose computer processors.

Whether real or simulated, a scenario requires an ego agent to navigate a real or modelled physical context. The ego agent is a real or simulated mobile robot that moves under the control of the stack under testing. The physical context includes static and/or dynamic element(s) that the stack under testing is required to respond to effectively. For example, the mobile robot may be a fully or semi-autonomous vehicle under the control of the stack (the ego vehicle). The physical context may comprise a static road layout and a given set of environmental conditions (e.g. weather, time of day, lighting conditions, humidity, pollution/particulate level etc.) that could be maintained or varied as the scenario progresses. An interactive scenario additionally includes one or more other agents ("external" agent(s), e.g. other vehicles, pedestrians, cyclists, animals etc.).

The following examples consider applications to autonomous vehicle testing. However, the principles apply equally to other forms of mobile robot.

Scenarios may be represented or defined at different levels of abstraction. More abstracted scenarios accommodate a greater degree of variation. For example, a "cut-in scenario" or a "lane change scenario" are examples of highly abstracted scenarios, characterized by a maneuver or behaviour of interest, that accommodate many variations (e.g. different agent starting locations and speeds, road layout, environmental conditions etc.). A "scenario run" refers to a concrete occurrence of an agent(s) navigating a physical context, optionally in the presence of one or more other agents. For example, multiple runs of a cut-in or lane change scenario could be performed (in the real-world and/or in a simulator) with different agent parameters (e.g. starting location, speed etc.), different road layouts, different environmental conditions, and/or different stack configurations etc. The terms "run" and "instance" are used interchangeably in this context.

In the following examples, the performance of the stack is assessed, at least in part, by evaluating the behaviour of the ego agent in the test oracle against a given set of performance evaluation rules, over the course of one or more runs. The rules are applied to "ground truth" of the (or each) scenario run which, in general, simply means an appropriate representation of the scenario run (including the behaviour of the ego agent) that is taken as authoritative for the purpose of testing. Ground truth is inherent to simulation; a simulator computes a sequence of scenario states, which is, by definition, a perfect, authoritative representation of the simulated scenario run. In a real-world scenario run, a "perfect" representation of the scenario run does not exist in the same sense; nevertheless, suitably informative ground truth can be obtained in numerous ways, e.g. based on manual annotation of on-board sensor data, automated/semi-automated annotation of such data (e.g. using offline/non-real time processing), and/or using external information sources (such as external sensors, maps etc.) etc.

The scenario ground truth typically includes a "trace" of the ego agent and any other (salient) agent(s) as applicable. A trace is a history of an agent's location and motion over the course of a scenario. There are many ways a trace can be represented. Trace data will typically include spatial and motion data of an agent within the environment. The term is used in relation to both real scenarios (with real-world traces) and simulated scenarios (with simulated traces). The trace typically records an actual trajectory realized by the agent in the scenario. With regards to terminology, a "trace" and a "trajectory" may contain the same or similar types of information (such as a series of spatial and motion states over time). The term trajectory is generally favoured in the context of planning (and can refer to future/predicted trajectories), whereas the term trace is generally favoured in relation to past behaviour in the context of testing/evaluation.

In a simulation context, a "scenario description" is provided to a simulator as input. For example, a scenario description may be encoded using a scenario description language (SDL), or in any other form that can be consumed by a simulator. A scenario description is typically a more abstract representation of a scenario, that can give rise to multiple simulated runs. Depending on the implementation, a scenario description may have one or more configurable parameters that can be varied to increase the degree of possible variation. The degree of abstraction and parameterization is a design choice. For example, a scenario description may encode a fixed layout, with parameterized environmental conditions (such as weather, lighting etc.). Further abstraction is possible, however, e.g. with configurable road parameter(s) (such as road curvature, lane configuration etc.). The input to the simulator comprises the scenario description together with a chosen set of parameter value(s) (as applicable). The latter may be referred to as a parameterization of the scenario. The configurable parameter(s) define a parameter space (also referred to as the scenario space), and the parameterization corresponds to a point in the parameter space. In this context, a "scenario instance" may refer to an instantiation of a scenario in a simulator based on a scenario description and (if applicable) a chosen parameterization.

For conciseness, the term scenario may also be used to refer to a scenario run, as well a scenario in the more abstracted sense. The meaning of the term scenario will be clear from the context in which it is used.

Trajectory planning is an important function in the present context, and the terms "trajectory planner", "trajectory planning system" and "trajectory planning stack" may be used interchangeably herein to refer to a component or components that can plan trajectories for a mobile robot into the future. Trajectory planning decisions ultimately determine the actual trajectory realized by the ego agent (although, in some testing contexts, this may be influenced by other factors, such as the implementation of those decisions in the control stack, and the real or modelled dynamic response of the ego agent to the resulting control signals).

A trajectory planner may be tested in isolation, or in combination with one or more other systems (e.g. perception, prediction and/or control). Within a full stack, planning generally refers to higher-level autonomous decision-making capability (such as trajectory planning), whilst control generally refers to the lower-level generation of control signals for carrying out those autonomous decisions. However, in the context of performance testing, the term control is also used in the broader sense. For the avoidance of doubt, when a trajectory planner is said to control an ego agent in simulation, that does not necessarily imply that a control system (in the narrower sense) is tested in combination with the trajectory planner.

### Example AV stack:

To provide relevant context to the described embodiments, further details of an example form of AV stack will now be described.

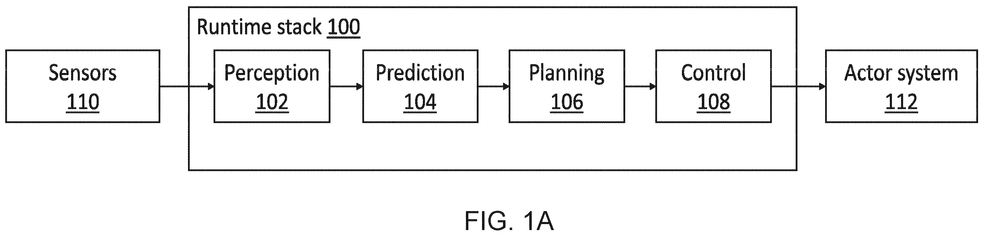

Figure 1A shows a highly schematic block diagram of an AV runtime stack 100. The run time stack 100 is shown to comprise a perception (sub-)system 102, a prediction (sub-)system 104, a planning (sub-)system (planner) 106 and a control (sub-)system (controller) 108. As noted, the term (sub-)stack may also be used to describe the aforementioned components 102-108.

In a real-world context, the perception system 102 receives sensor outputs from an on-board sensor system 110 of the AV, and uses those sensor outputs to detect external agents and measure their physical state, such as their position, velocity, acceleration etc. The on-board sensor system 110 can take different forms but generally comprises a variety of sensors such as image capture devices (cameras/optical sensors), lidar and/or radar unit(s), satellite-positioning sensor(s) (GPS etc.), motion/inertial sensor(s) (accelerometers, gyroscopes etc.) etc. The onboard sensor system 110 thus provides rich sensor data from which it is possible to extract detailed information about the surrounding environment, and the state of the AV and any external actors (vehicles, pedestrians, cyclists etc.) within that environment. The sensor outputs typically comprise sensor data of multiple sensor modalities such as stereo images from one or more stereo optical sensors, lidar, radar etc. Sensor data of multiple sensor modalities may be combined using filters, fusion components etc.

The perception system 102 typically comprises multiple perception components which co-operate to interpret the sensor outputs and thereby provide perception outputs to the prediction system 104.

In a simulation context, depending on the nature of the testing - and depending, in particular, on where the stack 100 is "sliced" for the purpose of testing (see below) - it may or may not be necessary to model the on-board sensor system 100. With higher-level slicing, simulated sensor data is not required therefore complex sensor modelling is not required.

The perception outputs from the perception system 102 are used by the prediction system 104 to predict future behaviour of external actors (agents), such as other vehicles in the vicinity of the AV.

Predictions computed by the prediction system 104 are provided to the planner 106, which uses the predictions to make autonomous driving decisions to be executed by the AV in a given driving scenario. The inputs received by the planner 106 would typically indicate a drivable area and would also capture predicted movements of any external agents (obstacles, from the AV's perspective) within the drivable area. The driveable area can be determined using perception outputs from the perception system 102 in combination with map information, such as an HD (high definition) map.

A core function of the planner 106 is the planning of trajectories for the AV (ego trajectories), taking into account predicted agent motion. This may be referred to as trajectory planning. A trajectory is planned in order to carry out a desired goal within a scenario. The goal could for example be to enter a roundabout and leave it at a desired exit; to overtake a vehicle in front; or to stay in a current lane at a target speed (lane following). The goal may, for example, be determined by an autonomous route planner (not shown).

The controller 108 executes the decisions taken by the planner 106 by providing suitable control signals to an on-board actor system 112 of the AV. In particular, the planner 106 plans trajectories for the AV and the controller 108 generates control signals to implement the planned trajectories. Typically, the planner 106 will plan into the future, such that a planned trajectory may only be partially implemented at the control level before a new trajectory is planned by the planner 106. The actor system 112 includes "primary" vehicle systems, such as braking, acceleration and steering systems, as well as secondary systems (e.g. signalling, wipers, headlights etc.).

Note, there may be a distinction between a planned trajectory at a given time instant, and the actual trajectory followed by the ego agent. Planning systems typically operate over a sequence of planning steps, updating the planned trajectory at each planning step to account for any changes in the scenario since the previous planning step (or, more precisely, any changes that deviate from the predicted changes). The planning system 106 may reason into the future, such that the planned trajectory at each planning step extends beyond the next planning step. Any individual planned trajectory may, therefore, not be fully realized (if the planning system 106 is tested in isolation, in simulation, the ego agent may simply follow the planned trajectory exactly up to the next planning step; however, as noted, in other real and simulation contexts, the planned trajectory may not be followed exactly up to the next planning step, as the behaviour of the ego agent could be influenced by other factors, such as the operation of the control system 108 and the real or modelled dynamics of the ego vehicle). In many testing contexts, the actual trajectory of the ego agent is what ultimately matters; in particular, whether the actual trajectory is safe, as well as other factors such as comfort and progress. However, the rules-based testing approach herein can also be applied to planned trajectories (even if those planned trajectories are not fully or exactly realized by the ego agent). For example, even if the actual trajectory of an agent is deemed safe according to a given set of safety rules, it might be that an instantaneous planned trajectory was unsafe; the fact that the planner 106 was considering an unsafe course of action may be revealing, even if it did not lead to unsafe agent behaviour in the scenario. Instantaneous planned trajectories constitute one form of internal state that can be usefully evaluated, in addition to actual agent behaviour in the simulation. Other forms of internal stack state can be similarly evaluated.

The example of Figure 1A considers a relatively "modular" architecture, with separable perception, prediction, planning and control systems 102-108. The sub-stack themselves may also be modular, e.g. with separable planning modules within the planning system 106. For example, the planning system 106 may comprise multiple trajectory planning modules that can be applied in different physical contexts (e.g. simple lane driving vs. complex junctions or roundabouts). This is relevant to simulation testing for the reasons noted above, as it allows components (such as the planning system 106 or individual planning modules thereof) to be tested individually or in different combinations. For the avoidance of doubt, with modular stack architectures, the term stack can refer not only to the full stack but to any individual sub-system or module thereof.

The extent to which the various stack functions are integrated or separable can vary significantly between different stack implementations - in some stacks, certain aspects may be so tightly coupled as to be indistinguishable. For example, in other stacks, planning and control may be integrated (e.g. such stacks could plan in terms of control signals directly), whereas other stacks (such as that depicted in Figure 1A) may be architected in a way that draws a clear distinction between the two (e.g. with planning in terms of trajectories, and with separate control optimizations to determine how best to execute a planned trajectory at the control signal level). Similarly, in some stacks, prediction and planning may be more tightly coupled. At the extreme, in so-called "end-to-end" driving, perception, prediction, planning and control may be essentially inseparable. Unless otherwise indicated, the perception, prediction planning and control terminology used herein does not imply any particular coupling or modularity of those aspects.

It will be appreciated that the term "stack" encompasses software, but can also encompass hardware. In simulation, software of the stack may be tested on a "generic" off-board computer system, before it is eventually uploaded to an on-board computer system of a physical vehicle. However, in "hardware-in-the-loop" testing, the testing may extend to underlying hardware of the vehicle itself. For example, the stack software may be run on the on-board computer system (or a replica thereof) that is coupled to the simulator for the purpose of testing. In this context, the stack under testing extends to the underlying computer hardware of the vehicle. As another example, certain functions of the stack 110 (e.g. perception functions) may be implemented in dedicated hardware. In a simulation context, hardware-in-the loop testing could involve feeding synthetic sensor data to dedicated hardware perception components.

### Testing paradigm:

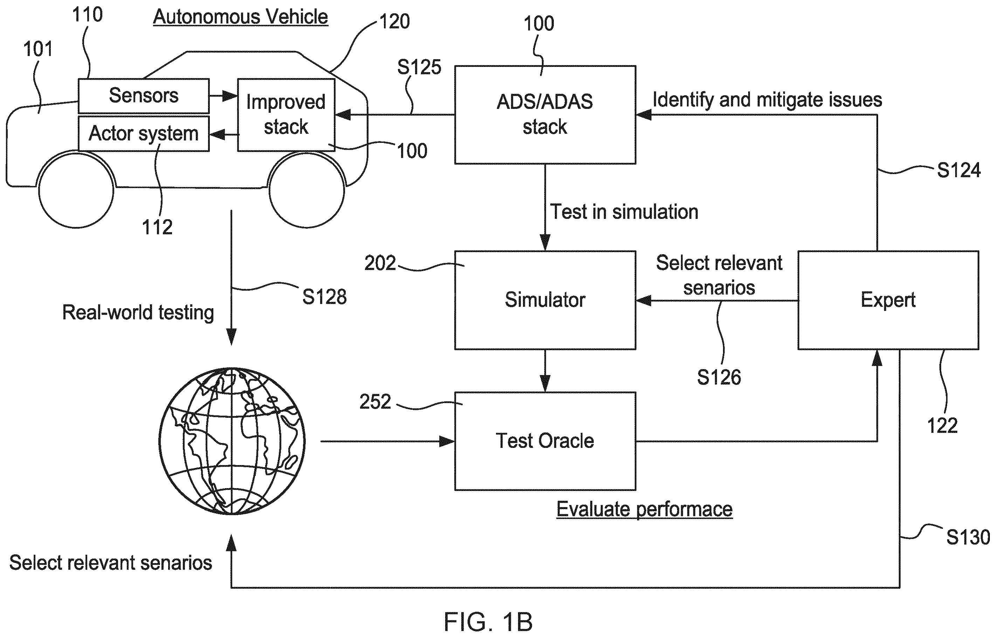

Figure 1B shows a highly schematic overview of a testing paradigm for autonomous vehicles. An ADS/ADAS stack 100, e.g. of the kind depicted in Figure 1A, is subject to repeated testing and evaluation in simulation, by running multiple scenario instances in a simulator 202, and evaluating the performance of the stack 100 (and/or individual subs-stacks thereof) in a test oracle 252. The output of the test oracle 252 is informative to an expert 122 (team or individual), allowing them to identify issues in the stack 100 and modify the stack 100 to mitigate those issues (S124). The results also assist the expert 122 in selecting further scenarios for testing (S126), and the process continues, repeatedly modifying, testing and evaluating the performance of the stack 100 in simulation. The improved stack 100 is eventually incorporated (S125) in a real-world AV 101, equipped with a sensor system 110 and an actor system 112. The improved stack 100 typically includes program instructions (software) executed in one or more computer processors of an on-board computer system of the vehicle 101 (not shown). The software of the improved stack is uploaded to the AV 101 at step S125. Step S125 may also involve modifications to the underlying vehicle hardware. On board the AV 101, the improved stack 100 receives sensor data from the sensor system 110 and outputs control signals to the actor system 112. Real-world testing (S128) can be used in combination with simulation-based testing. For example, having reached an acceptable level of performance though the process of simulation testing and stack refinement, appropriate real-world scenarios may be selected (S130), and the performance of the AV 101 in those real scenarios may be captured and similarly evaluated in the test oracle 252.

Scenarios can be obtained for the purpose of simulation in various ways, including manual encoding. The system is also capable of extracting scenarios for the purpose of simulation from real-world runs, allowing real-world situations and variations thereof to be re-created in the simulator 202.

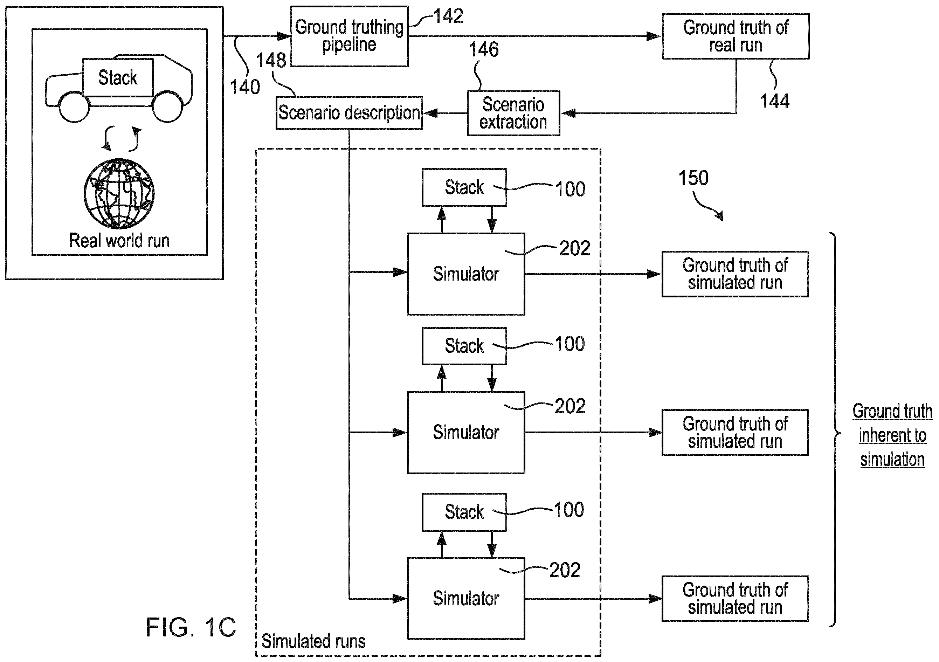

Figure 1C shows a highly schematic block diagram of a scenario extraction pipeline. Data 140 of a real-world run is passed to a 'ground-truthing' pipeline 142 for the purpose of generating scenario ground truth. The run data 140 could comprise, for example, sensor data and/or perception outputs captured/generated on board one or more vehicles (which could be autonomous, human-driven or a combination thereof), and/or data captured from other sources such external sensors (CCTV etc.). The run data is processed within the ground truthing pipeline 142, in order to generate appropriate ground truth 144 (trace(s) and contextual data) for the real-world run. As discussed, the ground-truthing process could be based on manual annotation of the 'raw' run data 140, or the process could be entirely automated (e.g. using offline perception method(s)), or a combination of manual and automated ground truthing could be used. For example, 3D bounding boxes may be placed around vehicles and/or other agents captured in the run data 140, in order to determine spatial and motion states of their traces. A scenario extraction component 146 receives the scenario ground truth 144, and processes the scenario ground truth 144 to extract a more abstracted scenario description 148 that can be used for the purpose of simulation. The scenario description 148 is consumed by the simulator 202, allowing multiple simulated runs to be performed. The simulated runs are variations of the original real-world run, with the degree of possible variation determined by the extent of abstraction. Ground truth 150 is provided for each simulated run.

In the present off-board content, there is no requirement for the traces to be extracted in real-time (or, more precisely, no need for them to be extracted in a manner that would support real-time planning); rather, the traces are extracted "offline". Examples of offline perception algorithms include non-real time and non-causal perception algorithms. Offline techniques contrast with "on-line" techniques that can feasibly be implemented within an AV stack 100 to facilitate real-time planning/decision making.

For example, it is possible to use non-real time processing, which cannot be performed on-line due to hardware or other practical constraints of an AV's onboard computer system. For example, one or more non-real time perception algorithms can be applied to the real-world run data 140 to extract the traces. A non-real time perception algorithm could be an algorithm that it would not be feasible to run in real time because of the computation or memory resources it requires.

It is also possible to use "non-causal" perception algorithms in this context. A non-causal algorithm may or may not be capable of running in real-time at the point of execution, but in any event could not be implemented in an online context, because it requires knowledge of the future. For example, a perception algorithm that detects an agent state (e.g. location, pose, speed etc.) at a particular time instant based on subsequent data could not support real-time planning within the stack 100 in an on-line context, because it requires knowledge of the future (unless it was constrained to operate with a short look ahead window). For example, filtering with a backwards pass is a non-causal algorithm that can sometimes be run in real-time, but requires knowledge of the future.

The term "perception" generally refers to techniques for perceiving structure in the real-world data 140, such as 2D or 3D bounding box detection, location detection, pose detection, motion detection etc. For example, a trace may be extracted as a time-series of bounding boxes or other spatial states in 3D space or 2D space (e.g. in a birds-eye-view frame of reference), with associated motion information (e.g. speed, acceleration, jerk etc.). In the context of image processing, such techniques are often classed as "computer vision", but the term perception encompasses a broader range of sensor modalities.

### Testing pipeline:

Further details of the testing pipeline and the test oracle 252 will now be described. The examples that follow focus on simulation-based testing. However, as noted, the test oracle 252 can equally be applied to evaluate stack performance on real scenarios, and the relevant description below applies equally to real scenarios. The following description refers to the stack 100 of Figure 1A by way of example. However, as noted, the testing pipeline 200 is highly flexible and can be applied to any stack or sub-stack operating at any level of autonomy.

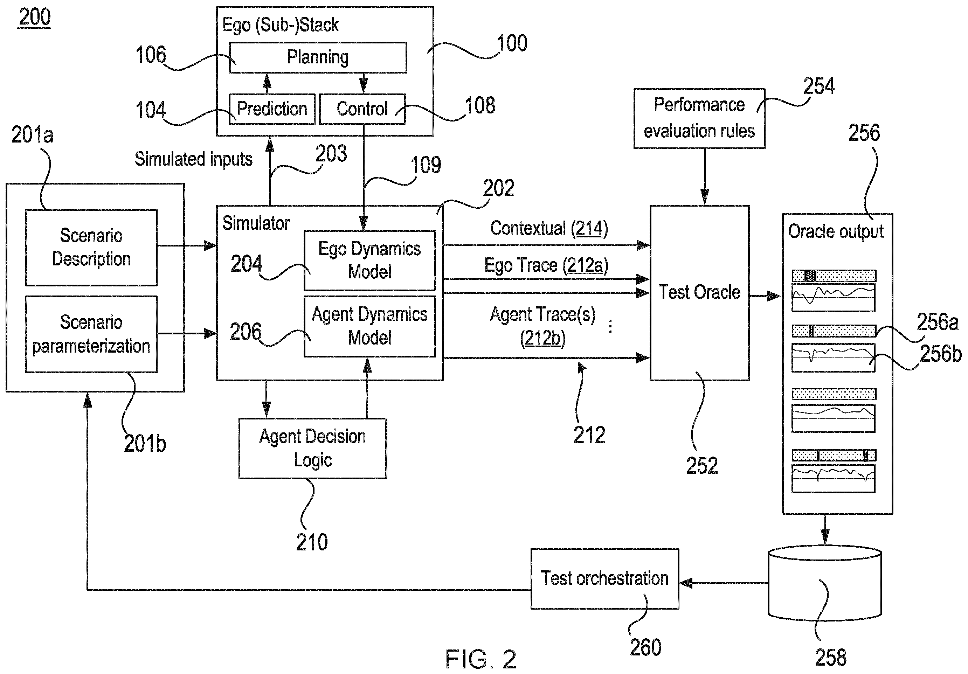

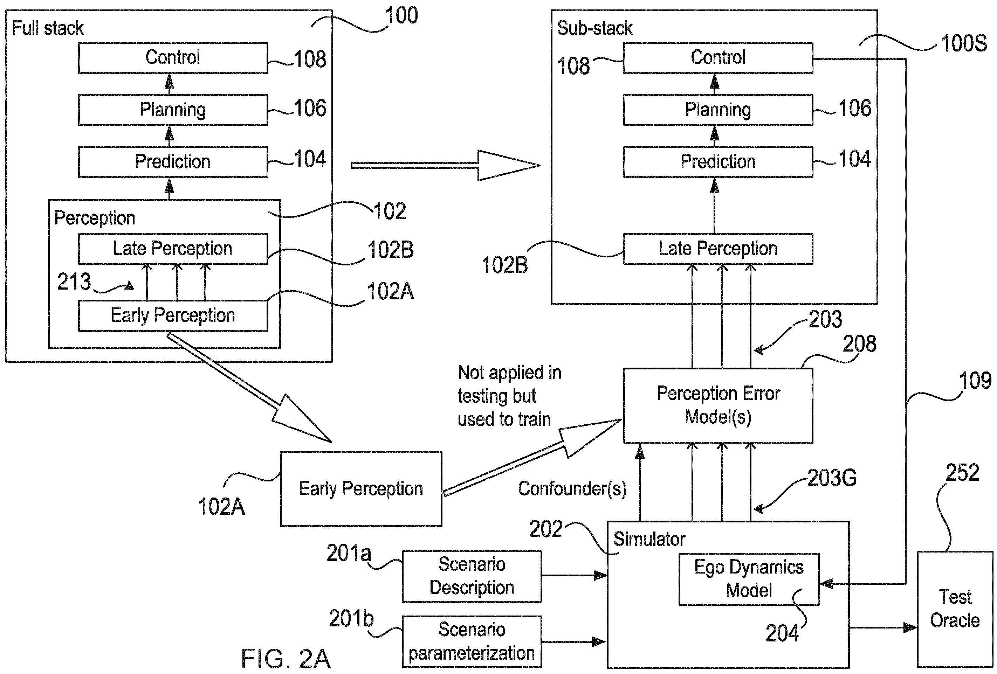

Figure 2 shows a schematic block diagram of the testing pipeline, denoted by reference numeral 200. The testing pipeline 200 is shown to comprise the simulator 202 and the test oracle 252. The simulator 202 runs simulated scenarios for the purpose of testing all or part of an AV run time stack 100, and the test oracle 252 evaluates the performance of the stack (or sub-stack) on the simulated scenarios. As discussed, it may be that only a sub-stack of the run-time stack is tested, but for simplicity, the following description refers to the (full) AV stack 100 throughout. However, the description applies equally to a sub-stack in place of the full stack 100. The term "slicing" is used herein to the selection of a set or subset of stack components for testing.

As described previously, the idea of simulation-based testing is to run a simulated driving scenario that an ego agent must navigate under the control of the stack 100 being tested. Typically, the scenario includes a static drivable area (e.g. a particular static road layout) that the ego agent is required to navigate, typically in the presence of one or more other dynamic agents (such as other vehicles, bicycles, pedestrians etc.). To this end, simulated inputs 203 are provided from the simulator 202 to the stack 100 under testing.

The slicing of the stack dictates the form of the simulated inputs 203. By way of example, Figure 2 shows the prediction, planning and control systems 104, 106 and 108 within the AV stack 100 being tested. To test the full AV stack of Figure 1A, the perception system 102 could also be applied during testing. In this case, the simulated inputs 203 would comprise synthetic sensor data that is generated using appropriate sensor model(s) and processed within the perception system 102 in the same way as real sensor data. This requires the generation of sufficiently realistic synthetic sensor inputs (such as photorealistic image data and/or equally realistic simulated lidar/radar data etc.). The resulting outputs of the perception system 102 would, in turn, feed into the higher-level prediction and planning systems 104, 106.

By contrast, so-called "planning-level" simulation would essentially bypass the perception system 102. The simulator 202 would instead provide simpler, higher-level inputs 203 directly to the prediction system 104. In some contexts, it may even be appropriate to bypass the prediction system 104 as well, in order to test the planner 106 on predictions obtained directly from the simulated scenario (i.e. "perfect" predictions).

Between these extremes, there is scope for many different levels of input slicing, e.g. testing only a subset of the perception system 102, such as "later" (higher-level) perception components, e.g. components such as filters or fusion components which operate on the outputs from lower-level perception components (such as object detectors, bounding box detectors, motion detectors etc.).

Whatever form they take, the simulated inputs 203 are used (directly or indirectly) as a basis for decision-making by the planner 108. The controller 108, in turn, implements the planner's decisions by outputting control signals 109. In a real-world context, these control signals would drive the physical actor system 112 of AV. In simulation, an ego vehicle dynamics model 204 is used to translate the resulting control signals 109 into realistic motion of the ego agent within the simulation, thereby simulating the physical response of an autonomous vehicle to the control signals 109.

Alternatively, a simpler form of simulation assumes that the ego agent follows each planned trajectory exactly between planning steps. This approach bypasses the control system 108 (to the extent it is separable from planning) and removes the need for the ego vehicle dynamic model 204. This may be sufficient for testing certain facets of planning.

To the extent that external agents exhibit autonomous behaviour/decision making within the simulator 202, some form of agent decision logic 210 is implemented to carry out those decisions and determine agent behaviour within the scenario. The agent decision logic 210 may be comparable in complexity to the ego stack 100 itself or it may have a more limited decision-making capability. The aim is to provide sufficiently realistic external agent behaviour within the simulator 202 to be able to usefully test the decision-making capabilities of the ego stack 100. In some contexts, this does not require any agent decision making logic 210 at all (open-loop simulation), and in other contexts useful testing can be provided using relatively limited agent logic 210 such as basic adaptive cruise control (ACC). One or more agent dynamics models 206 may be used to provide more realistic agent behaviour if appropriate.

A scenario is run in accordance with a scenario description 201a and (if applicable) a chosen parameterization 201b of the scenario. A scenario typically has both static and dynamic elements which may be "hard coded" in the scenario description 201a or configurable and thus determined by the scenario description 201a in combination with a chosen parameterization 201b. In a driving scenario, the static element(s) typically include a static road layout.

The dynamic element(s) typically include one or more external agents within the scenario, such as other vehicles, pedestrians, bicycles etc.

The extent of the dynamic information provided to the simulator 202 for each external agent can vary. For example, a scenario may be described by separable static and dynamic layers. A given static layer (e.g. defining a road layout) can be used in combination with different dynamic layers to provide different scenario instances. The dynamic layer may comprise, for each external agent, a spatial path to be followed by the agent together with one or both of motion data and behaviour data associated with the path. In simple open-loop simulation, an external actor simply follows the spatial path and motion data defined in the dynamic layer that is nonreactive i.e. does not react to the ego agent within the simulation. Such open-loop simulation can be implemented without any agent decision logic 210. However, in closed-loop simulation, the dynamic layer instead defines at least one behaviour to be followed along a static path (such as an ACC behaviour). In this case, the agent decision logic 210 implements that behaviour within the simulation in a reactive manner, i.e. reactive to the ego agent and/or other external agent(s).

Motion data may still be associated with the static path but in this case is less prescriptive and may for example serve as a target along the path. For example, with an ACC behaviour, target speeds may be set along the path which the agent will seek to match, but the agent decision logic 210 might be permitted to reduce the speed of the external agent below the target at any point along the path in order to maintain a target headway from a forward vehicle.

As will be appreciated, scenarios can be described for the purpose of simulation in many ways, with any degree of configurability. For example, the number and type of agents, and their motion information may be configurable as part of the scenario parameterization 201b.

The output of the simulator 202 for a given simulation includes an ego trace 212a of the ego agent and one or more agent traces 212b of the one or more external agents (traces 212). Each trace 212a, 212b is a complete history of an agent's behaviour within a simulation having both spatial and motion components. For example, each trace 212a, 212b may take the form of a spatial path having motion data associated with points along the path such as speed, acceleration, jerk (rate of change of acceleration), snap (rate of change of jerk) etc.

Additional information is also provided to supplement and provide context to the traces 212. Such additional information is referred to as "contextual" data 214. The contextual data 214 pertains to the physical context of the scenario, and can have both static components (such as road layout) and dynamic components (such as weather conditions to the extent they vary over the course of the simulation). To an extent, the contextual data 214 may be "passthrough" in that it is directly defined by the scenario description 201a or the choice of parameterization 201b, and is thus unaffected by the outcome of the simulation. For example, the contextual data 214 may include a static road layout that comes from the scenario description 201a or the parameterization 201b directly. However, typically the contextual data 214 would include at least some elements derived within the simulator 202. This could, for example, include simulated environmental data, such as weather data, where the simulator 202 is free to change weather conditions as the simulation progresses. In that case, the weather data may be time-dependent, and that time dependency will be reflected in the contextual data 214.

The test oracle 252 receives the traces 212 and the contextual data 214, and scores those outputs in respect of a set of performance evaluation rules 254. The performance evaluation rules 254 are shown to be provided as an input to the test oracle 252.

The rules 254 are categorical in nature (e.g. pass/fail-type rules). Certain performance evaluation rules are also associated with numerical performance metrics used to "score" trajectories (e.g. indicating a degree of success or failure or some other quantity that helps explain or is otherwise relevant to the categorical results). The evaluation of the rules 254 is time-based - a given rule may have a different outcome at different points in the scenario. The scoring is also time-based: for each performance evaluation metric, the test oracle 252 tracks how the value of that metric (the score) changes over time as the simulation progresses. The test oracle 252 provides an output 256 comprising a time sequence 256a of categorical (e.g. pass/fail) results for each rule, and a score-time plot 256b for each performance metric, as described in further detail later. The results and scores 256a, 256b are informative to the expert 122 and can be used to identify and mitigate performance issues within the tested stack 100. The test oracle 252 also provides an overall (aggregate) result for the scenario (e.g. overall pass/fail). The output 256 of the test oracle 252 is stored in a test database 258, in association with information about the scenario to which the output 256 pertains. For example, the output 256 may be stored in association with the scenario description 210a (or an identifier thereof), and the chosen parameterization 201b. As well as the time-dependent results and scores, an overall score may also be assigned to the scenario and stored as part of the output 256. For example, an aggregate score for each rule (e.g. overall pass/fail) and/or an aggregate result (e.g. pass/fail) across all of the rules 254.

Figure 2A illustrates another choice of slicing and uses reference numerals 100 and 100S to denote a full stack and sub-stack respectively. It is the sub-stack 100S that would be subject to testing within the testing pipeline 200 of Figure 2.

A number of "later" perception components 102B form part of the sub-stack 100S to be tested and are applied, during testing, to simulated perception inputs 203. The later perception components 102B could, for example, include filtering or other fusion components that fuse perception inputs from multiple earlier perception components.

In the full stack 100, the later perception components 102B would receive actual perception inputs 213 from earlier perception components 102A. For example, the earlier perception components 102A might comprise one or more 2D or 3D bounding box detectors, in which case the simulated perception inputs provided to the late perception components could include simulated 2D or 3D bounding box detections, derived in the simulation via ray tracing. The earlier perception components 102A would generally include component(s) that operate directly on sensor data. With the slicing of Figure 2A, the simulated perception inputs 203 would correspond in form to the actual perception inputs 213 that would normally be provided by the earlier perception components 102A. However, the earlier perception components 102A are not applied as part of the testing, but are instead used to train one or more perception error models 208 that can be used to introduce realistic error, in a statistically rigorous manner, into the simulated perception inputs 203 that are fed to the later perception components 102B of the sub-stack 100 under testing.

Such perception error models may be referred to as Perception Statistical Performance Models (PSPMs) or, synonymously, "PRISMs". Further details of the principles of PSPMs, and suitable techniques for building and training them, may be found in International Patent Publication Nos. WO2021037763 WO2021037760, WO2021037765, WO2021037761, and WO2021037766. The idea behind PSPMs is to efficiently introduce realistic errors into the simulated perception inputs provided to the sub-stack 100S (i.e. that reflect the kind of errors that would be expected were the earlier perception components 102A to be applied in the real-world). In a simulation context, "perfect" ground truth perception inputs 203G are provided by the simulator, but these are used to derive more realistic (ablated) perception inputs 203 with realistic error introduced by the perception error models(s) 208. The perception error model(s) 208 serve as a "surrogate model" (being a surrogate for the perception system 102, or part of the perception system 102A, but operating on lower-fidelity inputs).

As described in the aforementioned reference, a PSPM can be dependent on one or more variables representing physical condition(s) ("confounders"), allowing different levels of error to be introduced that reflect different possible real-world conditions. Hence, the simulator 202 can simulate different physical conditions (e.g. different weather conditions) by simply changing the value of a weather confounder(s), which will, in turn, change how perception error is introduced.

The later perception components 102b within the sub-stack 100S process the simulated perception inputs 203 in exactly the same way as they would process the real-world perception inputs 213 within the full stack 100, and their outputs, in turn, drive prediction, planning and control.

Alternatively, PRISMs can be used to model the entire perception system 102, including the late perception components 208, in which case a PSPM(s) is used to generate realistic perception output that are passed as inputs to the prediction system 104 directly.

Depending on the implementation, there may or may not be deterministic relationship between a given scenario parameterization 201b and the outcome of the simulation for a given configuration of the stack 100 (i.e. the same parameterization may or may not always lead to the same outcome for the same stack 100). Non-determinism can arise in various ways. For example, when simulation is based on PRISMs, a PRISM might model a distribution over possible perception outputs at each given time step of the scenario, from which a realistic perception output is sampled probabilistically. This leads to non-deterministic behaviour within the simulator 202, whereby different outcomes may be obtained for the same stack 100 and scenario parameterization because different perception outputs are sampled. Alternatively, or additionally, the simulator 202 may be inherently non-deterministic, e.g. weather, lighting or other environmental conditions may be randomized/probabilistic within the simulator 202 to a degree. As will be appreciated, this is a design choice: in other implementations, varying environmental conditions could instead be fully specified in the parameterization 201b of the scenario. With non-deterministic simulation, multiple scenario instances could be run for each parameterization. An aggregate pass/fail result could be assigned to a particular choice of parameterization 201b, e.g. as a count or percentage of pass or failure outcomes.

A test orchestration component 260 is responsible for selecting scenarios for the purpose of simulation. For example, the test orchestration component 260 may select scenario descriptions 201a and suitable parameterizations 201b automatically, which may be based on the test oracle outputs 256 from previous scenarios and/or other criteria.

### Test oracle rules:

The performance evaluation rules 254 are constructed as computational graphs (rule trees) to be applied within the test oracle. Unless otherwise indicated, the term "rule tree" herein refers to the computational graph that is configured to implement a given rule. Each rule is constructed as a rule tree, and a set of multiple rules may be referred to as a "forest" of multiple rule trees.

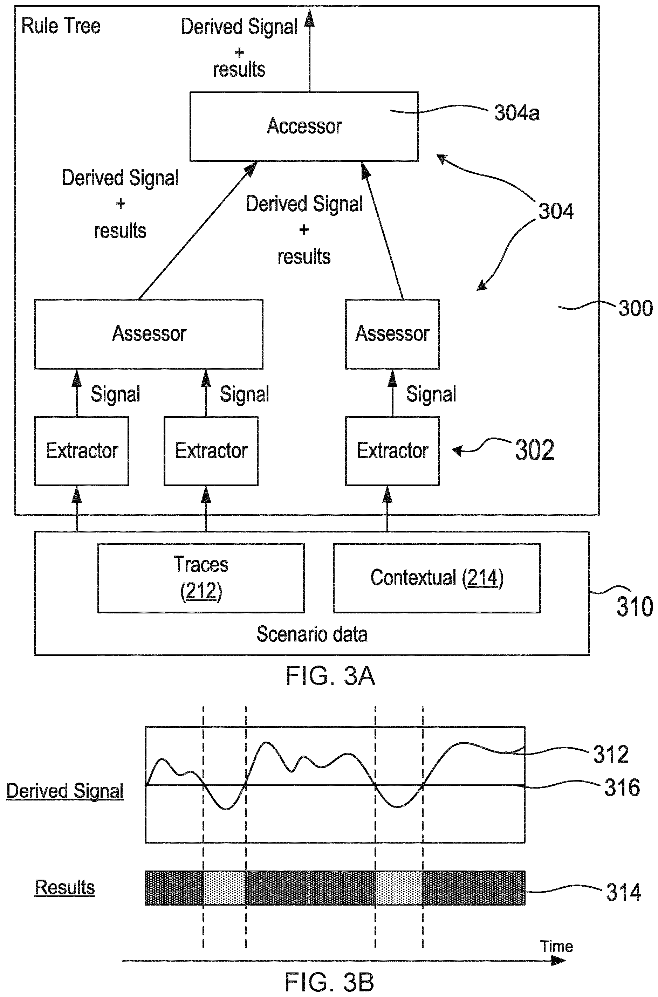

Figure 3A shows an example of a rule tree 300 constructed from a combination of extractor nodes (leaf objects) 302 and assessor nodes (non-leaf objects) 304. Each extractor node 302 extracts a time-varying numerical (e.g. floating point) signal (score) from a set of scenario data 310. The scenario data 310 is a form of scenario ground truth, in the sense laid out above, and may be referred to as such. The scenario data 310 has been obtained by deploying a trajectory planner (such as the planner 106 of Figure 1A) in a real or simulated scenario, and is shown to comprise ego and agent traces 212 as well as contextual data 214. In the simulation context of Figure 2 or Figure 2A, the scenario ground truth 310 is provided as an output of the simulator 202. When applied to real-world data, the scenario ground truth 310 may be provided by the ground truthing pipeline 142.

Each assessor node 304 is shown to have at least one child object (node), where each child object is one of the extractor nodes 302 or another one of the assessor nodes 304. Each assessor node receives output(s) from its child node(s) and applies an assessor function to those output(s). The output of the assessor function is a time-series of categorical results. The following examples consider simple binary pass/fail results, but the techniques can be readily extended to non-binary results. Each assessor function assesses the output(s) of its child node(s) against a predetermined atomic rule. Such rules can be flexibly combined in accordance with a desired safety model.

In addition, each assessor node 304 derives a time-varying numerical signal (robustness score) from the output(s) of its child node(s), which is related to the categorical results by a threshold condition (see below).

A top-level root node 304a is an assessor node that is not a child node of any other node. The top-level node 304a outputs a final sequence of results, and its descendants (i.e. nodes that are direct or indirect children of the top-level node 304a) provide the underlying signals and intermediate results.

Figure 3B visually depicts an example of a derived signal 312 and a corresponding time-series of results 314 computed by an assessor node 304. The results 314 are correlated with the derived signal 312, in that a pass result is returned when (and only when) the derived signal exceeds a failure threshold 316. As will be appreciated, this is merely one example of a threshold condition that relates a time-sequence of results to a corresponding signal.

Signals extracted directly from the scenario ground truth 310 by the extractor nodes 302 may be referred to as "raw" signals, to distinguish from "derived" signals computed by assessor nodes 304. Results and raw/derived signals may be discretized in time.

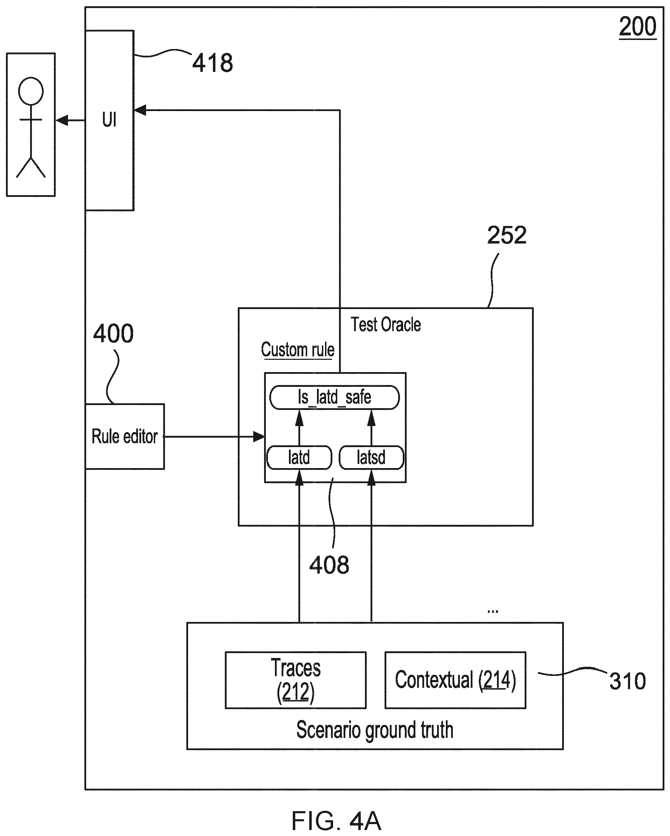

Figure 4A shows an example of a rule tree implemented within the testing platform 200.

A rule editor 400 is provided for constructing rules to be implemented with the test oracle 252. The rule editor 400 receives rule creation inputs from a user (who may or may not be the end-user of the system). In the present example, the rule creation inputs are coded in a domain specific language (DSL) and define at least one rule graph 408 to be implemented within the test oracle 252. The rules are logical rules in the following examples, with TRUE and FALSE representing pass and failure respectively (as will be appreciated, this is purely a design choice).

The following examples consider rules that are formulated using combinations of atomic logic predicates. Examples of basic atomic predicates include elementary logic gates (OR, AND etc.), and logical functions such as "greater than", (Gt(a,b)) (which returns TRUE when a is greater than b, and false otherwise).

A Gt function is to implement a safe lateral distance rule between an ego agent and another agent in the scenario (having agent identifier "other_agent_id"). Two extractor nodes (latd, latsd) apply LateralDistance and LateralSafeDistance extractor functions respectively. Those functions operate directly on the scenario ground truth 310 to extract, respectively, a time-varying lateral distance signal (measuring a lateral distance between the ego agent and the identified other agent), and a time-varying safe lateral distance signal for the ego agent and the identified other agent. The safe lateral distance signal could depend on various factors, such as the speed of the ego agent and the speed of the other agent (captured in the traces 212), and environmental conditions (e.g. weather, lighting, road type etc.) captured in the contextual data 214.

An assessor node (is_latd_safe) is a parent to the latd and latsd extractor nodes, and is mapped to the Gt atomic predicate. Accordingly, when the rule tree 408 is implemented, the is_latd_safe assessor node applies the Gt function to the outputs of the latd and latsd extractor nodes, in order to compute a true/false result for each timestep of the scenario, returning TRUE for each time step at which the latd signal exceeds the latsd signal and FALSE otherwise. In this manner, a "safe lateral distance" rule has been constructed from atomic extractor functions and predicates; the ego agent fails the safe lateral distance rule when the lateral distance reaches or falls below the safe lateral distance threshold. As will be appreciated, this is a very simple example of a rule tree. Rules of arbitrary complexity can be constructed according to the same principles.

The test oracle 252 applies the rule tree 408 to the scenario ground truth 310, and provides the results via a user interface (UI) 418.

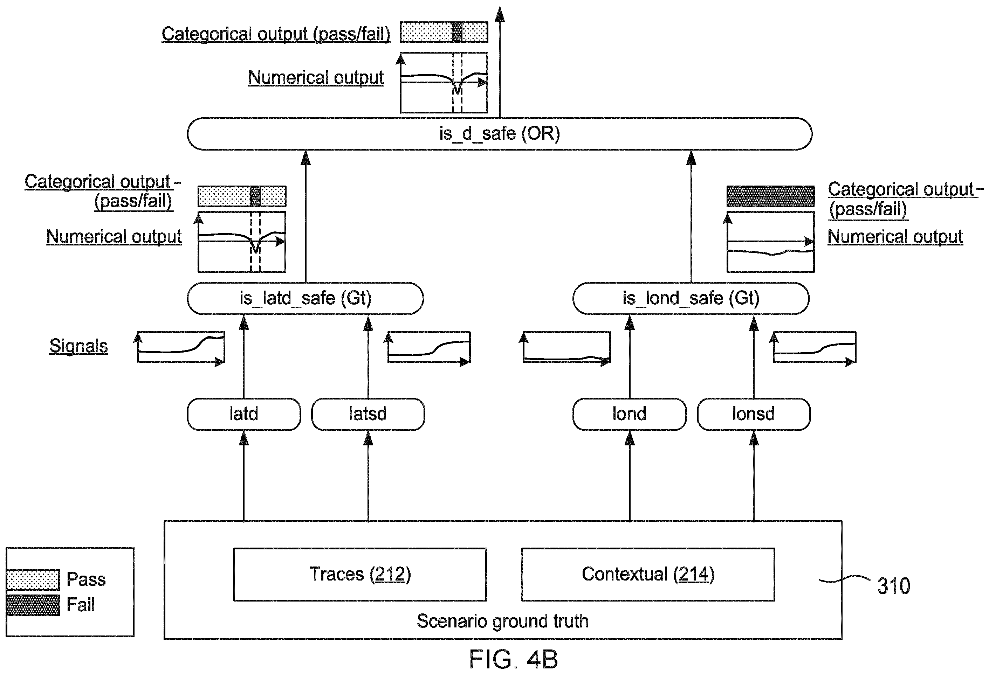

Figure 4B shows an example of a rule tree that includes a lateral distance branch corresponding to that of Figure 4A. Additionally, the rule tree includes a longitudinal distance branch, and a top-level OR predicate (safe distance node, is_d_safe) to implement a safe distance metric. Similar to the lateral distance branch, the longitudinal distance brand extracts longitudinal distance and longitudinal distance threshold signals from the scenario data (extractor nodes lond and lonsd respectively), and a longitudinal safety assessor node (is_lond_safe) returns TRUE when the longitudinal distance is above the safe longitudinal distance threshold. The top-level OR node returns TRUE when one or both of the lateral and longitudinal distances is safe (below the applicable threshold), and FALSE if neither is safe. In this context, it is sufficient for only one of the distances to exceed the safety threshold (e.g. if two vehicles are driving in adjacent lanes, their longitudinal separation is zero or close to zero when they are side-by-side; but that situation is not unsafe if those vehicles have sufficient lateral separation).

The numerical output of the top-level node could, for example, be a time-varying robustness score.

Different rule trees can be constructed, e.g. to implement different rules of a given safety model, to implement different safety models, or to apply rules selectively to different scenarios (in a given safety model, not every rule will necessarily be applicable to every scenario; with this approach, different rules or combinations of rules can be applied to different scenarios). Within this framework, rules can also be constructed for evaluating comfort (e.g. based on instantaneous acceleration and/or jerk along the trajectory), progress (e.g. based on time taken to reach a defined goal) etc.

The above examples consider simple logical predicates evaluated on results or signals at a single time instance, such as OR, AND, Gt etc. However, in practice, it may be desirable to formulate certain rules in terms of temporal logic.

Hekmatnejad et al., "Encoding and Monitoring Responsibility Sensitive Safety Rules for Automated Vehicles in Signal Temporal Logic" (2019), MEMOCODE '19: Proceedings of the 17th ACM-IEEE International Conference on Formal Methods and Models for System Design discloses a signal temporal logic (STL) encoding of the RSS safety rules. Temporal logic provides a formal framework for constructing predicates that are qualified in terms of time. This means that the result computed by an assessor at a given time instant can depend on results and/or signal values at another time instant(s).

For example, a requirement of the safety model may be that an ego agent responds to a certain event within a set time frame. Such rules can be encoded in a similar manner, using temporal logic predicates within the rule tree.

In the above examples, the performance of the stack 100 is evaluated at each time step of a scenario. An overall test result (e.g. pass/fail) can be derived from this - for example, certain rules (e.g. safety-critical rules) may result in an overall failure if the rule is failed at any time step within the scenario (that is, the rule must be passed at every time step to obtain an overall pass on the scenario). For other types of rule, the overall pass/fail criteria may be "softer" (e.g. failure may only be triggered for a certain rule if that rule is failed over some number of sequential time steps), and such criteria may be context dependent.

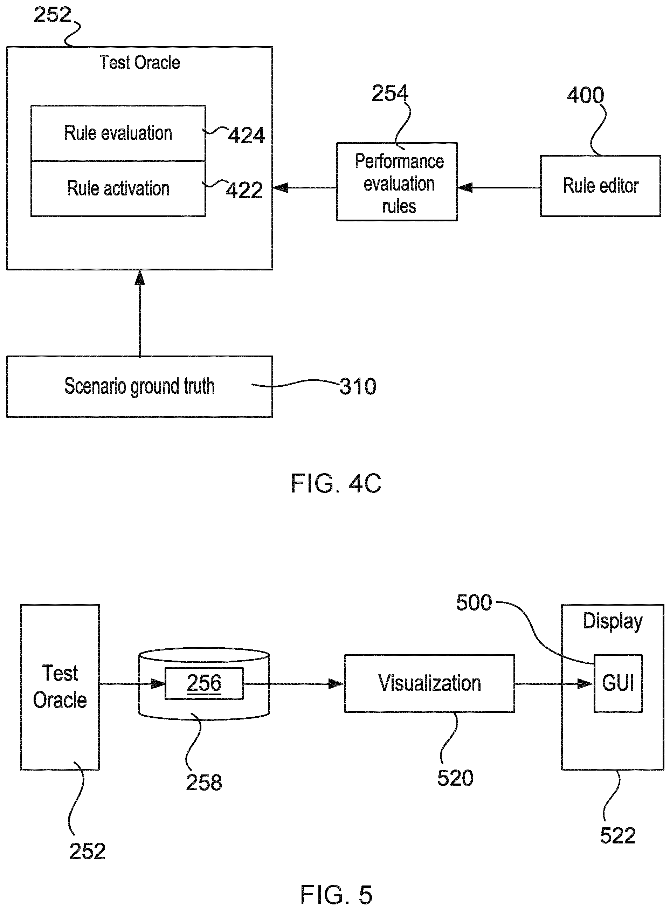

Figure 4C schematically depicts a hierarchy of rule evaluation implemented within the test oracle 252. A set of rules 254 is received for implementation in the test oracle 252.

Certain rules apply only to the ego agent (an example being a comfort rule that assesses whether or not some maximum acceleration or jerk threshold is exceeded by the ego trajectory at any given time instant).

Other rules pertain to the interaction of the ego agent with other agents (for example, a "no collision" rule or the safe distance rule considered above). Each such rule is evaluated in a pairwise fashion between the ego agent and each other agent. As another example, a "pedestrian emergency braking" rule may only be activated when a pedestrian walks out in front of the ego vehicle, and only in respect of that pedestrian agent.

Not every rule will necessarily be applicable to every scenario, and some rules may only be applicable for part of a scenario. Rule activation logic 422 within the test oracle 422 determines if and when each of the rules 254 is applicable to the scenario in question, and selectively activates rules as and when they apply. A rule may, therefore, remain active for the entirety of a scenario, may never be activated for a given scenario, or may be activated for only some of the scenario. Moreover, a rule may be evaluated for different numbers of agents at different points in the scenario. Selectively activating rules in this manner can significantly increase the efficiency of the test oracle 252.

The activation or deactivation of a given rule may be dependent on the activation/deactivation of one or more other rules. For example, an "optimal comfort" rule may be deemed inapplicable when the pedestrian emergency braking rule is activated (because the pedestrian's safety is the primary concern), and the former may be deactivated whenever the latter is active.

Rule evaluation logic 424 evaluates each active rule for any time period(s) it remains active. Each interactive rule is evaluated in a pairwise fashion between the ego agent and any other agent to which it applies.

There may also be a degree of interdependency in the application of the rules. For example, another way to address the relationship between a comfort rule and an emergency braking rule would be to increase a jerk/acceleration threshold of the comfort rule whenever the emergency braking rule is activated for at least one other agent.

Whilst pass/fail results have been considered, rules may be non-binary. For example, two categories for failure - "acceptable" and "unacceptable" - may be introduced. Again, considering the relationship between a comfort rule and an emergency braking rule, an acceptable failure on a comfort rule may occur when the rule is failed but at a time when an emergency braking rule was active. Interdependency between rules can, therefore, be handled in various ways.

The activation criteria for the rules 254 can be specified in the rule creation code provided to the rule editor 400, as can the nature of any rule interdependencies and the mechanism(s) for implementing those interdependencies.

### Graphical user interface:

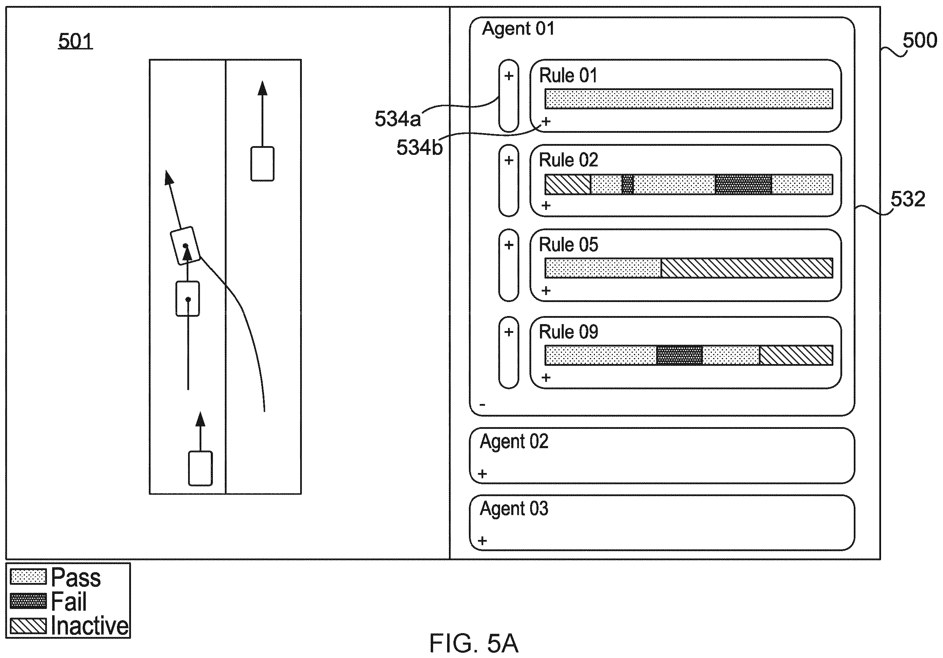

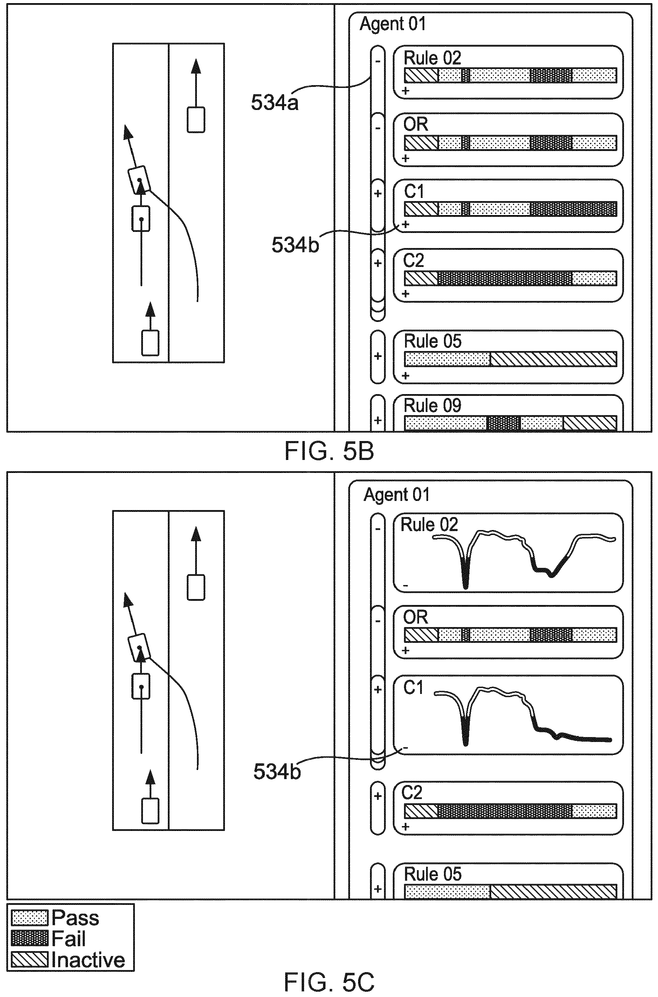

Figure 5 shows a schematic block diagram of a visualization component 520. The visualization component is shown having an input connected to the test database 258 for rendering the outputs 256 of the test oracle 252 on a graphical user interface (GUI) 500. The GUI is rendered on a display system 522.

Figure 5A shows an example view of the GUI 500. The view pertains to a particular scenario containing multiple agents. In this example, the test oracle output 526 pertains to multiple external agents, and the results are organized according to agent. For each agent, a time-series of results is available for each rule applicable to that agent at some point in the scenario. In the depicted example, a summary view has been selected for "Agent 01", causing the "top-level" results computed to be displayed for each applicable rule. There are the top-level results computed at the root node of each rule tree. Colour coding is used to differentiate between periods when the rule is inactive for that agent, active and passes, and active and failed.

A first selectable element 534a is provided for each time-series of results. This allows lower-level results of the rule tree to be accessed, i.e. as computed lower down in the rule tree.

Figure 5B shows a first expanded view of the results for "Rule 02", in which the results of lower-level nodes are also visualized. For example, for the "safe distance" rule of Figure 4B, the results of the "is_latd_safe node" and the "is_lond_safe" nodes may be visualized (labelled "C1" and "C2" in Figure 5B). In the first expanded view of Rule 02, it can be seen that success/failure on Rule 02 is defined by a logical OR relationship between results C1 and C2; Rule 02 is failed only when failure is obtained on both C1 and C2 (as in the "safe distance" rule above).

A second selectable element 534b is provided for each time-series of results, that allows the associated numerical performance scores to be accessed.

Figure 5C shows a second expanded view, in which the results for Rule 02 and the "C1" results have been expanded to reveal the associated scores for time period(s) in which those rules are active for Agent 01. The scores are displayed as a visual score-time plot that is similarly colour coded to denote pass/fail.

### Example scenarios:

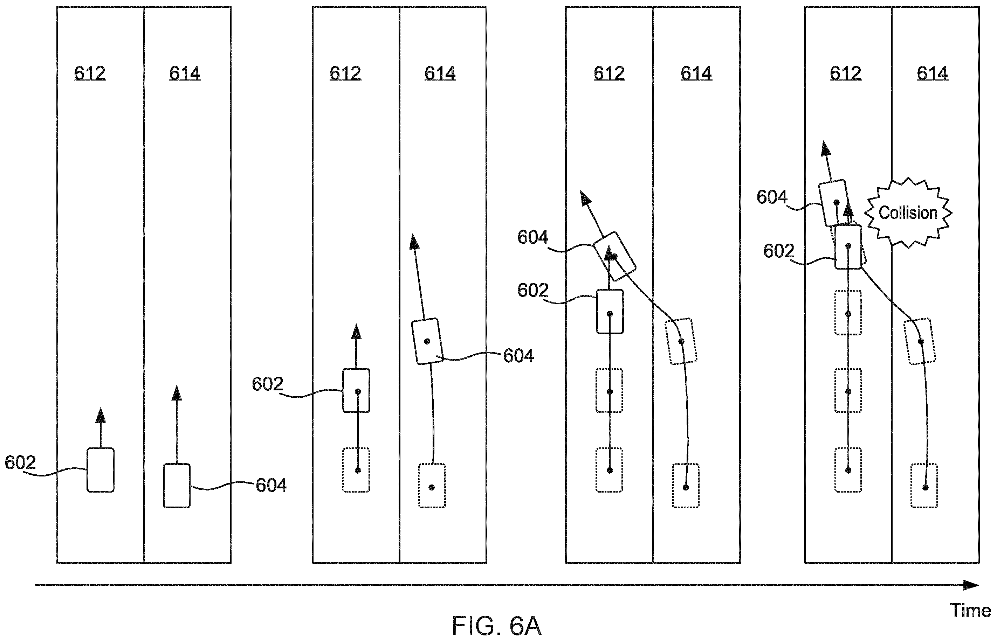

Figure 6A depicts a first instance of a cut-in scenario in the simulator 202 that terminates in a collision event between an ego vehicle 602 and another vehicle 604. The cut-in scenario is characterized as a multi-lane driving scenario, in which the ego vehicle 602 is moving along a first lane 612 (the ego lane) and the other vehicle 604 is initially moving along a second, adjacent lane 604. At some point in the scenario, the other vehicle 604 moves from the adjacent lane 614 into the ego lane 612 ahead of the ego vehicle 602 (the cut-in distance). In this scenario, the ego vehicle 602 is unable to avoid colliding with the other vehicle 604. The first scenario instance terminates in response to the collision event.

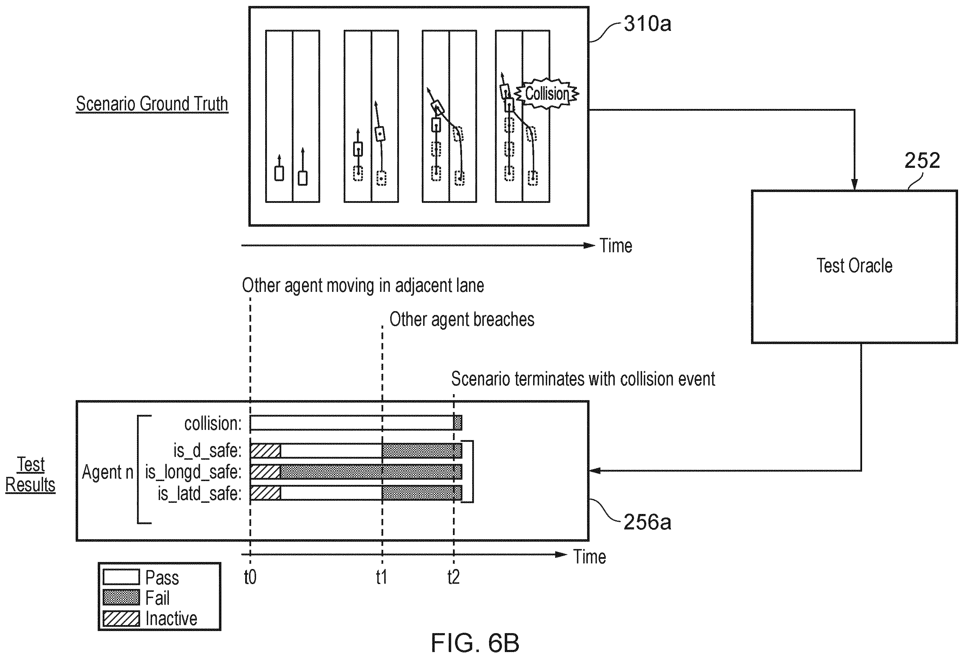

Figure 6B depicts an example of a first oracle output 256a obtained from ground truth 310a of the first scenario instance. A "no collision" rule is evaluated over the duration of the scenario between the ego vehicle 602 and the other vehicle 604. The collision event results in failure on this rule at the end of the scenario. In addition, the "safe distance" rule of Figure 4B is evaluated.

As the other vehicle 604 moves laterally closer to the ego vehicle 602, there comes a point in time (t1) when both the safe lateral distance and safe longitudinal distance thresholds are breached, resulting in failure on the safe distance rule that persists up to the collision event at time t2.

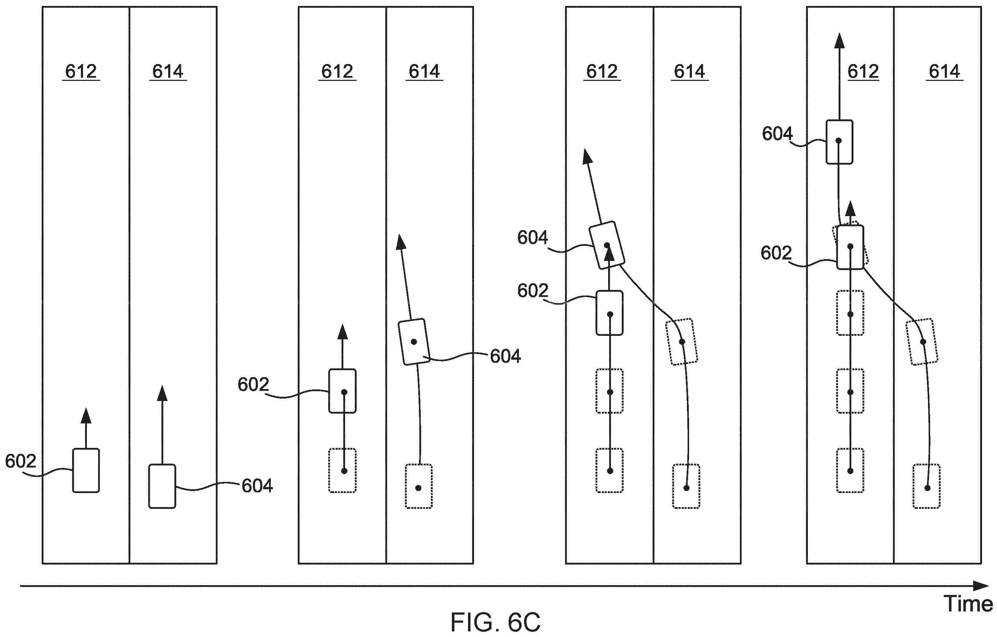

Figure 6C depicts a second instance of the cut-in scenario. In the second instance, the cut-in event does not result in a collision, and the ego vehicle 602 is able to reach a safe distance behind the other vehicle 604 following the cut in event.

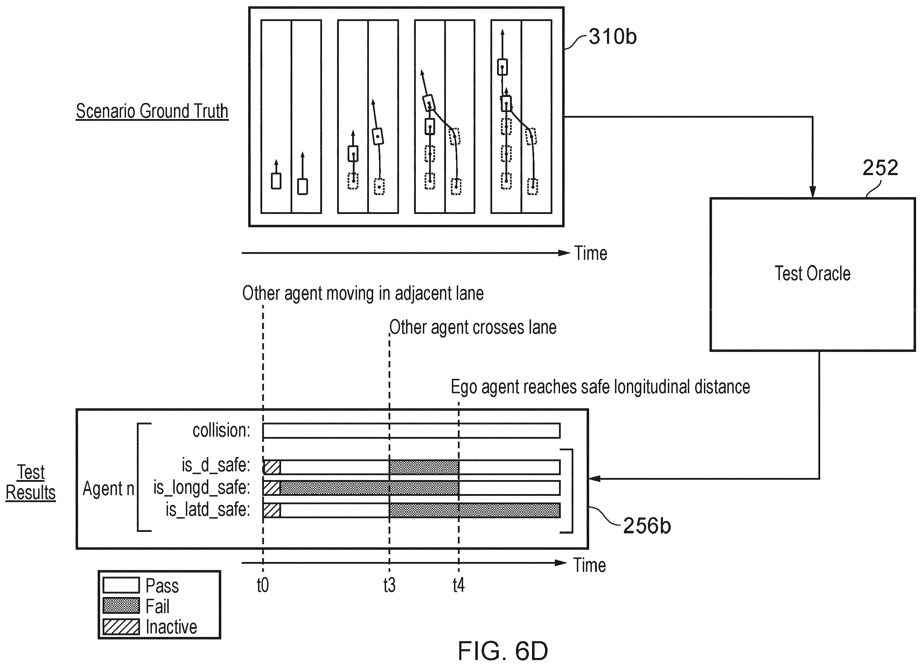

Figure 6D depicts an example of a second oracle output 256b obtained from ground truth 310b of the second scenario instance. In this case, the "no collision" rule is passed throughout. The safe distance rule is breached at time t3 when the lateral distance between the ego vehicle 602 and the other vehicle 604 becomes unsafe. However, at time t4, the ego vehicle 602 manages to reach a safe distance behind the other vehicle 604. Therefore, the safe distance rule is only failed between time t3 and time t4.

### Identifying Salient Test Runs:

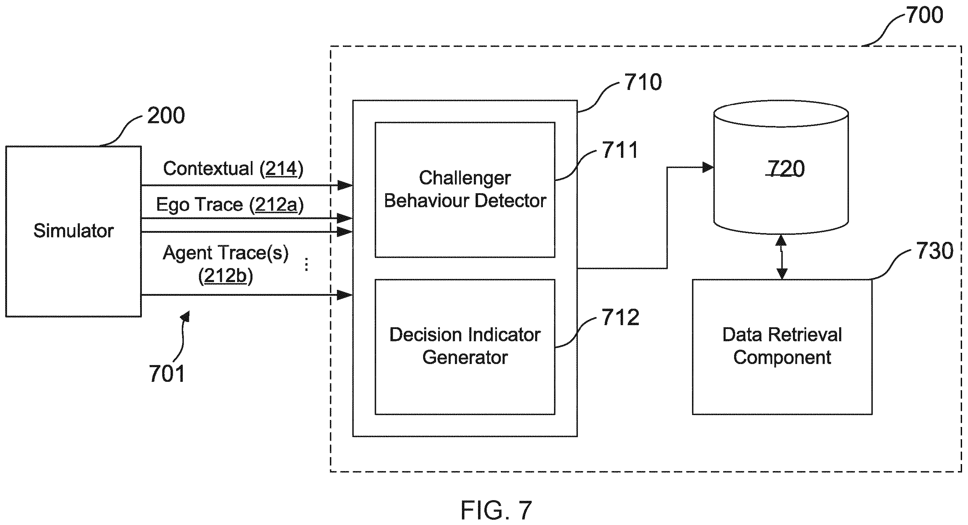

Figure 7 schematically illustrates a computer system 700 for identifying salient test runs. The system 700 comprises a test oracle 710, a results database 720 and a data retrieval component 730.

The test oracle 710 and results database 720 respectively correspond to the test oracle 252 and results database 258 described above with reference to Figures 1 to 6, augmented with the further additional functionality described below.

The test oracle 710 is configured to receive multiple sets of run data, each set of the run data pertaining to a run through a driving scenario. The driving scenario involves an ego agent controlled by an autonomous vehicle system, such as the AV stacks 100 described herein. The scenario also includes a challenger agent or "external" agent, e.g. other vehicles, pedestrians, cyclists, animals etc. In some cases, the scenario will involve multiple challenger agents, either of the same type or different types.

The run data, generally indicated by the reference numeral 701, may comprise traces 212 of the ego agent and the challenger agents, as discussed hereinabove. The run data 701 may also include the additional contextual data 214 discussed above. Although Figure 7 illustrates the test oracle 710 receiving run data from a simulator 202, in other examples the run data may pertain to a real scenario. In such examples, the run data 701 may be similar to the ground truth 144 of a real run discussed above.

The test oracle 710 includes a challenger behaviour detector 711. The challenger behaviour detector 711 generates at least one time-indexed event from the run data 701, in response to the behaviour or actions of a challenger agent in the run data 701.

The event may be detected by applying a plurality of conditions to the behaviour of the challenger agent and/or ego agent, to determine that an event has occurred.

One example event may be a "cut-in" event, in which a challenger agent changes lane so as to cut in ahead of the ego agent in the manner described above with reference to Figures 6A and 6C. In such an example, the conditions may include the following:
- the challenger agent is in a lane adjacent to the ego agent (i.e. either nearside or offside);
- the ego agent did not change lane
- the challenger agent crossed the line between the lane it was occupying and the lane of the ego agent, within a given headway distance in front of the ego agent
- the challenger agent occupied the ego lane within the given headway distance

If all these conditions are satisfied, the behaviour detector 711 will determine that the cut-in event has occurred. If not all of the conditions are satisfied (e.g. because the challenger agent is far enough ahead to be outside of the headway distance), the behaviour detector 711 will determine that the cut-in event has not occurred.

The event may be associated with a plurality of parameters. For example, the cut-in event may be associated with a longitudinal distance (i.e. headway) from the ego agent to the challenger agent at the start of the cut in, a challenger agent speed prior to cut in, and a challenger agent lateral velocity during lane change. The conditions may then take the form of constraints placed upon the parameters. For example, if the headway distance, the challenger agent speed and the lateral velocity are within predetermined ranges, it is determined that the event has occurred.

The event is time-indexed in the sense that the challenger behaviour detector 711 is configured to determine the time step or time steps in the run data 701 at during which the event is occurring. For example, the challenger behaviour detector 711 may output a value corresponding to true associated with each time step in the run data 701 at which the event occurs, and a value corresponding to false associated with each time step in the run data 701 at which the event no longer occurs. However, in other examples the challenger behaviour detector 711 may instead output other information that allows the identification of the time indexes at which the event occurred, such as an indication of the time indexes forming the start and end of the event.

Other example events include a cut-out event and a braking event.

A cut-out event occurs when a first challenger agent, ahead of the ego agent and in the ego agents's lane, moves into an adjacent lane and reveals a second challenger agent that is slow or stationary in front of it. The second challenger agent may constitute a hazard for ego to avoid. Example parameters associated with a cut-out event can include one or more of: a longitudinal distance from the first challenger agent to the second challenger agent at the start of the cut-out; the first challenger agent lateral offset from lane centre; the second challenger agent lateral offset from lane centre; first challenger agent lateral offset from lane centre after lane change; the second challenger agent speed after the cut-out; the first challenger agent lateral velocity during lance change; and the first challenger agent speed prior to cut-out.

A braking event occurs when another agent, such as the challenger agent, ahead of the ego agent, and in the ego agent's lane, suddenly brakes. The other agent may constitute a hazard for the ego agent to avoid. Example parameters associated with a braking event can include one or more of: the challenger agent speed after deceleration, the maximum rate of deceleration by the challenger agent, and the maximum rate of jerk of the challenger agent.

It will be appreciated that a wide range of different events can be specified straightforwardly using conditions and parameters of the type discussed above. The challenger behaviour detector 711 is able to detect multiple different defined events from the run data 701.

The test oracle 710 also includes a decision indicator generator 712, also referred to herein as a decision component. The decision indicator generator 712 generates a sequence of decision indicators over a plurality of time steps of the run data. At each time step, the decision indicator represents whether a particular driving action that could be carried out by the ego agent would be permissible, if the ego agent chose to perform it. To make this assessment, a 'basic driver model' is used to plan a (hypothetical) trajectory for carrying out the action in question (e.g. lane change) from the ego's current state to some short time into the future (e.g. a second or a few seconds). This hypothetical trajectory is then assessed based on one or more driving rules (similar to how the ego's actual behaviour is assessed in the test oracle). In the examples below, the calculations are simplified, by reducing this hypothetical trajectory to a single future state at a single point in time (the basic driver model computes a single future state of the ego agent a few seconds into the future, assuming it to have carried out the action in question, and this single state is then assessed against the applicable driving rule(s)). In other implementations, this could be extended to consider multiple future states.

Note, the rules-based planner does not require 'full' planner logic. In the above example, the rules based planner is implemented as a simplified basic driver model, using a second event type that models simplified driver behaviour. For example, when considering safety of lane changes, the simplified rules-based planner might look for a gap in the traffic in the lane next to ego. Based on a predefined assumption that if the ego were to start performing a lane change in the current timestep, complete it within 'x' seconds, remain at its current speed, a determination is made as to whether the lane change maneuver is safe, e.g., would it impact any oncoming vehicles in that lane. Taking this as a simplified planner decision, the basic driver model could be configured to find gaps in traffic that a hypothetical planner may have decided to move into or not based on its perception. This can then be compared with ground truth, to determine (for example) that, because the ego missed a pertinent agent from its perceived view of the world, it may have deemed it safe to lane change, when in fact the ground truth assessment showed that it was not safe to change.

The assessment carried out by the decision indicator generator 712 is independent of the stack 100 under testing that is in control of the ego agent during the run. That is to say, the assessment carried out by the decision indicator generator 712 is not fed back to the ego agent and has no bearing on how the ego agent performs in the test. The only dependence on the ego agent stems from the fact that the hypothetical trajectory is planned based on the ego's current state. This hypothetical trajectory is not a prediction in the sense that the basic driver model is not trying to predict what the ego agent is likely to do next; rather, the assessment is whether a given action would be safe to take at a given point in time. For example, the ego agent might remain in a single lane throughout a given time interval, and a yes/no decision indicator might be generated at every timestep throughout that time interval, indicating whether or not a lane change would be safe according to the basic driver model.

Given a current "snapshot" of a driving scenario at some point in time (i.e. a particular time step of the run data 701, also referred to as a driving scene or frame) and an action to be evaluated, a decision component classifies the action as belonging to a decision class from a predefined set of decision classes. The decision component is rules-based in the following examples, made by evaluating one or more decision rules (e.g. driving safety rule(s) - see below).

The decision classes may be binary, e.g. with only two possible decision classes indicating whether or not the action is permitted (referred to as "pass" and "fail" respectively; note that, with decision indicators, the 'pass/fail' assessment pertains the basic driver model rather than the ego agent: a 'fail' on a decision indicator indicates that the trajectory generated by the basic driver model fails at least one applicable rule, and does not imply that the ego agent's actual behaviour has violated any rule). This binary classification constitutes a decision as to whether or not the action could be performed at the current point in time. Determining whether an action is permitted would typically consider safety and may consider other facets of driving performance (comfort, progress etc.). For example, in a lane driving scenario, given a snapshot of the scenario, the decision component may decide whether or not a lane change maneuver is safe/permitted.

In the following examples, the decision component 712 is applied to a sequence of snapshots of an evolving scenario (i.e. the run data 701) over a sequence of time steps. In this context, a decision point refers to a time step at which a change in decision class occurs, relative to the previous time step. For example, a lane change maneuver might be classed as unsafe in one timestep and safe in the next timestep, representing a lane change decision point.

The method applied by the decision component 712 does not require trajectories to be determined or synthesised using the stack 100. In the examples below, an action is classified against a given snapshot at time step n by "rolling forward" from the current snapshot to some appropriate later time using some motion model(s), and assessing the outcome.

Simple motion models may be used for this purpose. For example, in a lane change scenario, an end position of an ego agent after a predetermined maneuver interval (e.g. 4 seconds) may be determined, which places the ego agent centrally in a target lane. The other agents may be assumed to move with constant velocity in that e.g. 4 second interval, allowing their end positions to be determined based on their velocities given in the snapshot at time n. A decision rule or rule set may then be evaluated at the end of the window, e.g. whether the ego agent is a safe distance from all other agents at the end of the e.g. 4 second window. Here, the decision class is decided based on a single evaluation, e.g. 4 second after the current snapshot (this does not pick up the edge case that something unsafe happened during the maneuver but the end state was safe, but this is very rare in practice).

A snapshot at timestep n refers to a view of the scenario at or up to time n. In the examples below, the snapshot includes only current state data (e.g. agent states at time n). However, the snapshot could include historic data (e.g. states prior to time n).

The decision making component 712 may be referred to as a "rules-based" planner or a "basic driver model".

As discussed above, safety models have been used in autonomous driving to precisely define the concept of "safe". Examples of known safety models include the RSS and the Automated Lane Keeping Specification (ALKS) being developed by the UK government. Within a testing pipeline, a safety model can be used as a basis for rules-based testing of driving performance, in terms of well-defined numerical quantities such as lateral or longitudinal distance (e.g., between two agents, or relative to a road reference point or line etc.). Rules-based testing can be extended to other facets of driving performance, such as progress and comfort. As discussed above, the test oracle 710 applies some predefined driving rule set to a given scenario run (which could be real or simulated).

These driving rules are re-purposed to provide a rules-based planner 712 operating in a form of "shadow mode". Shadow mode sometimes implies an autonomous system operating in the background, on board a human-driven vehicle. However, here the term is used in a broader sense, to mean any open loop decision making (that is, decision making that is based on some scenario but does not affect the behaviour of the ego agent in that scenario). The purpose of the rules-based planner is not to assess the performance of the ego agent in a scenario run. Rather, the scenario run is simply used to provide static "snapshots" of the scenario. Given a snapshot and a desired objective, the rules-based planner 712 provides an assessment as to whether that objective is permitted (e.g., safe or, more generally, permitted by the driving rule set) given that snapshot.

The sequence of decision indicators derived by the rules-based planner is not necessarily an optimal course of action (although it is, by definition guaranteed to be safe), nor will it necessarily reflect the actual decisions taken by the ego agent over the course of the scenario run (e.g. a scenario might be used to evaluate the safety of a lane change maneuver. However, the lane change maneuver may or may not be performed in the scenario itself).

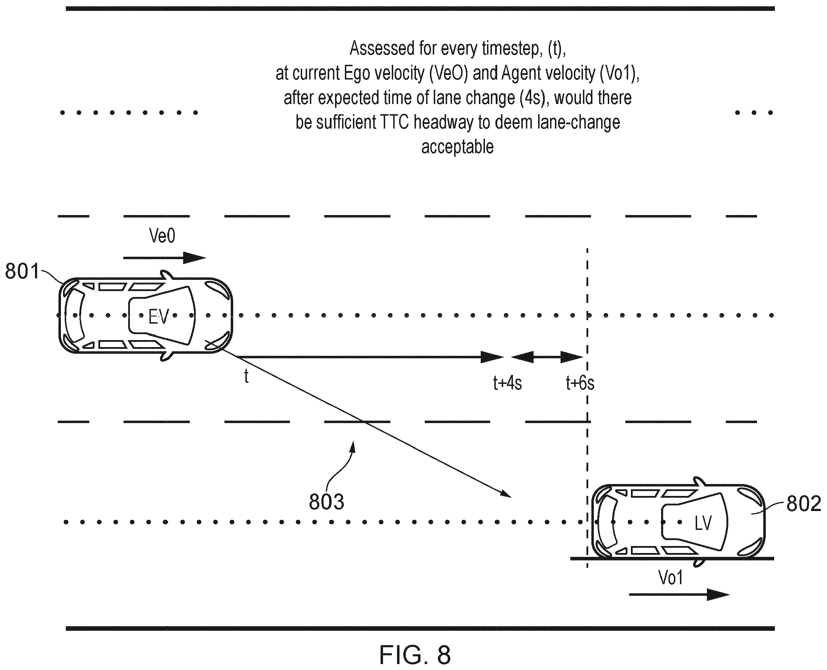

Figure 8 illustrates assessment of a predefined driving action in the form of an offside lane change action, involving an ego agent 801 and a challenger agent 802. As illustrated, the decision indicator generator 712 generates a planned trajectory 803 associated with the driving action. In order to generate the planned trajectory 803, the driving action may be associated with a duration for performing the action, such as 4 seconds in the case of the lane change. The decision indicator 712 may assume that the ego agent 801 and challenger agent 802 are travelling at velocities (respectively Ve0 and Vo1) that will remain constant throughout the action. The decision indicator generator 712 is then configured to assess the planned trajectory 803 to determine whether it corresponds to an action that is permissible, or whether it is impermissible in that it contravenes one of the predetermined rules of the rules-based planner. In the example shown, the offside lane change is permissible, because it results in the ego agent 801 moving to a position behind the challenger agent 802 with sufficient headway.

The example of Figure 8 illustrates assessment of an offside lane change. Other example predefined driving actions that may be assessed by the decision indicator generator include a nearside lane change, entry into a roundabout, merge into highway traffic, and unprotected left or right turns

As noted above, the rules of the rules-based planner used to assess the planned trajectory 803 (hereinafter referred to as "the action assessment rules") may correspond to the performance evaluation rules 254 that are used by the oracle 252/700 to assess the run data 701. That is to say, that the same set of rules may be used for two different purposes: to assess the actual actions of the ego agent during the run, and to assess whether a predefined driving action would have been permitted at a given time step in the run. However, it is not necessary that the performance evaluation rules 254 correspond to the action assessment rules. Instead, different rules or partially overlapping sets of rules may be provided for these two different purposes.

The decision indicator generator 712 may carry out the assessment over a series of time steps of the run data 701, to generate a sequence of decision indicators representing whether the predefined driving action is permissible. For example, the decision indicator generator 712 may perform the assessment at every time step of the run data 701. In other examples, the assessment may be carried out for only a portion of the run data 701. For example, decisions related to lane changes may only be applied to parts of the run data 701 involving roads with multiple lanes.

The time-indexed events generated by the challenger behaviour detector 711 and the decision indicators generated by the decision indicator generator 712 for a particular run form a set of outputs for that run, which the test oracle 700 is configured to store in the results database 720. The set of outputs may also include the outputs 256 discussed above.

The stored outputs may then be retrieved by the data retrieval component 730. The data retrieval component 730 comprise a suitable query interface for querying the database 720, and as such can retrieve outputs stored in the database 720 by querying on the time-indexed events and decision indicators. In other words, the data retrieval component 730 is able to search the outputs stored in the database 720, so as to retrieve results that satisfy a filter. For example, the data retrieval component 730 is able to retrieve outputs including a particular time-indexed event (e.g. a cut-in) and a particular decision indicator (e.g. it is not safe to change lanes).

In some examples, the data retrieval component 730 may retrieve results where the time-index of the event and the time-index of the decision indicator are the same, or within a range of one another. That is to say, in one example the data retrieval component 730 retrieves results where an event (e.g. a cut-in) occurs at the same time index a particular decision indicator (e.g. it is not safe to change lanes). In another example, the data retrieval component 730 retrieves results where an event (e.g. a cut-in) occurs at a time index within a predetermined time index range of a particular decision indicator (e.g. it is not safe to change lanes), such as within 10 seconds or 30 seconds thereof. In these cases where the results are limited based on the relative time-index of the event and decision indicator, the data retrieval component 730 may additionally identify the section of the run data 701 in which the event and decision indicator are present.

As discussed in detail above with respect to Figures 5 and 6, the outputs of the test oracle 252 may be visualised by a visualization component 520 and displayed on a GUI 500 of a suitable display system 522. The outputs of the test oracle 700 may similarly be visualised and displayed on a GUI 500. Accordingly, the data retrieval component 730 may be coupled to the visualisation component 520, or incorporated into the visualisation component 520.

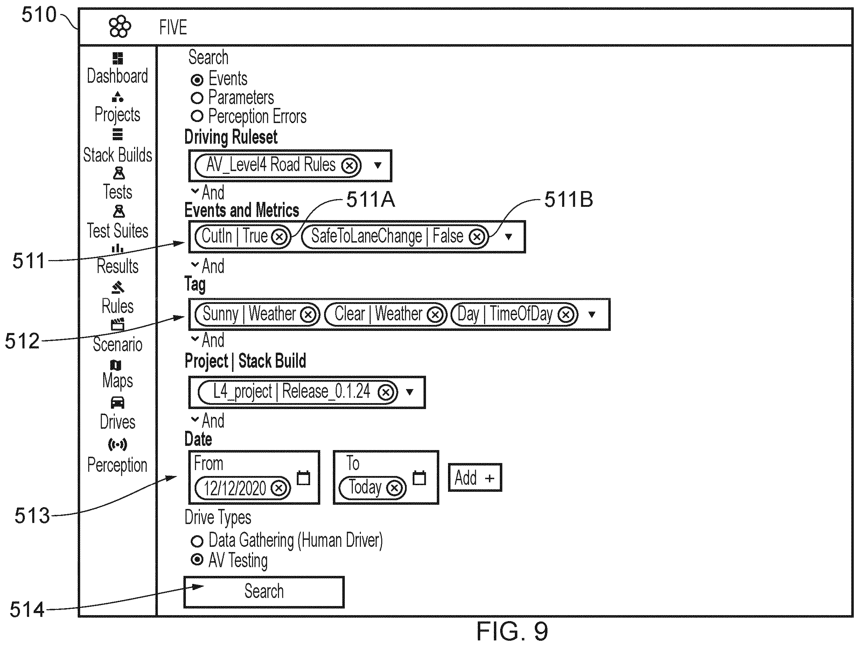

Figure 9 illustrates an example query GUI 510, via which a user may query based on the time-indexed events and decision indicators. The query screen includes an event and decision input box 511, which allows a user to specify events and/or decision indicators. This may be in the form of a tag input box, though other suitable input boxed may be provided. In the Figure, the user has entered input 511A corresponding to the presence of a cut-in event, and input 511B corresponding to the safe to change lane value being false. The GUI 510 also includes an input box 512 for adding additional search criteria such as the weather or time of day, and an input box 513 for restricting the date range of the run data, and a search button 514 to execute the query.

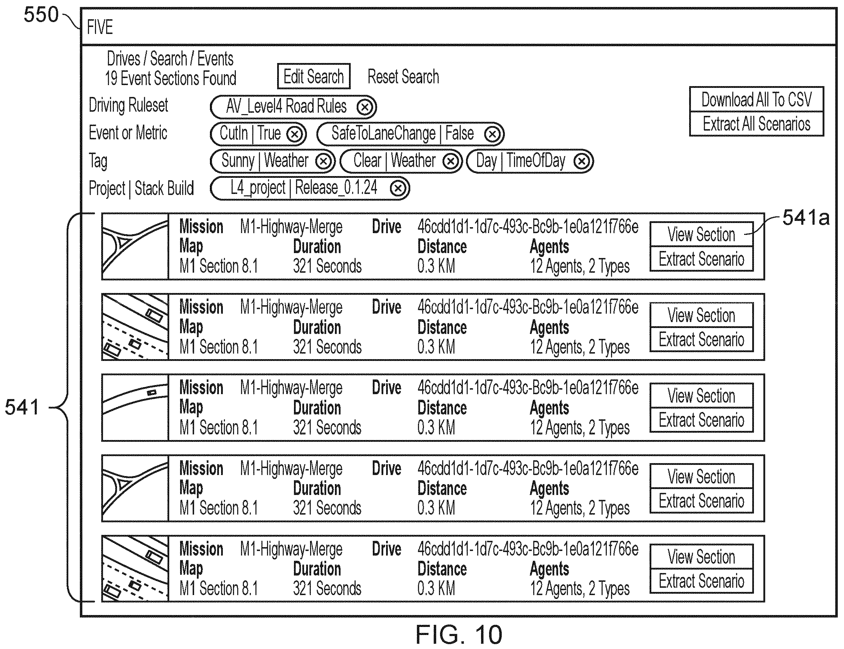

Figure 10 illustrates an example results GUI 550, which displays results of the query input via query GUI 510. The results GUI 550 includes a list of runs 551 retrieved based on the query, each of which may be selected and viewed in detail. Associated with each run in the list of runs 551 is a button 551a that allows retrieval of the section of the run that includes the event and/or decision indicators.

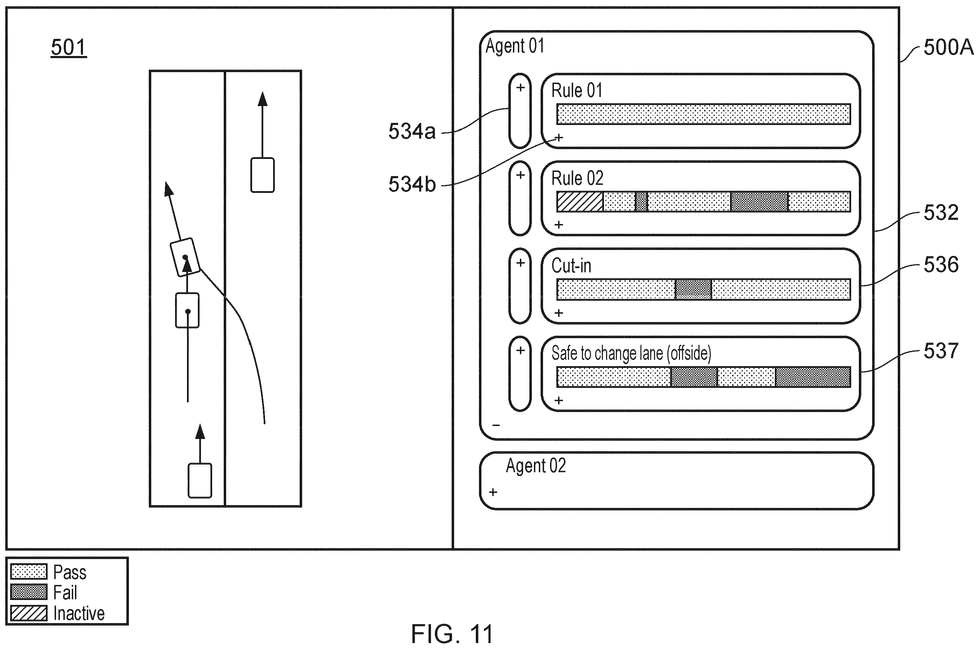

The GUI 550 may allow the selection of a run, so that it can be viewed using a GUI 500A, illustrated in Figure 11. The GUI 500A corresponds to the GUI 500 discussed above, with the addition of a further time-series 536 showing the occurrence of the event, and a time-series 537 showing the permissibility/impermissibility of the driving action represented by the decision indicators.

Although the functions of the challenger behaviour detector 711, decision indicator generator 712 and/or data retrieval component 720 have been described as forming part of the test oracle 700, in other examples these functions may be carried out independently of the test oracle 700. In other words, the processing of the run data 701 to generate the time-indexed events and decision indicators may be carried out as part of a system or method that does not also involve evaluating the run data 701 to assess the behaviour of the ego agent in relation to performance evaluation rules 254. For example, the run data 701 may be processed as part of a pipeline for identifying suitable scenarios that may form training data for AV stacks. In such circumstances, the performance results of the ego agent under testing in the run data 701 may not be relevant.

Furthermore, the functions of the challenger behaviour detector 711 and decision indicator generator 712 may be carried out at different times, and at different times to the assessment of the performance evaluation rules 254. For example, the generation of the time-indexed events and decision indicators may be carried out in separate offline or batch processes.

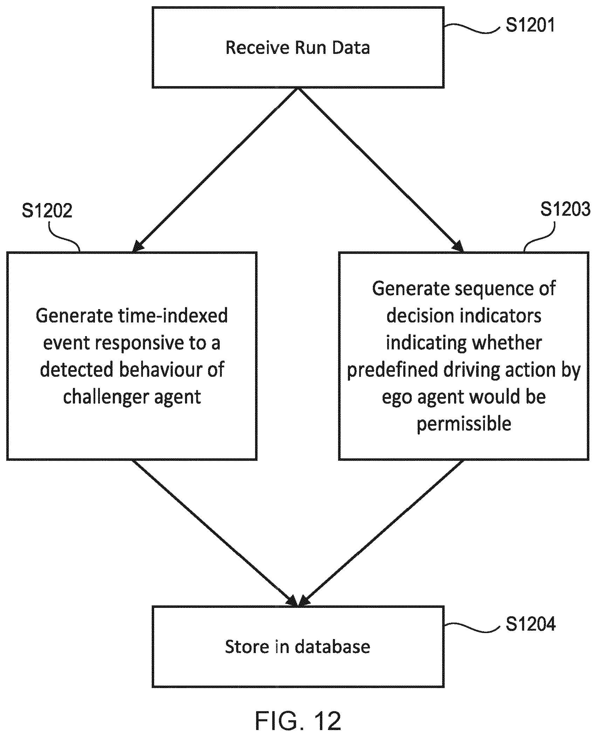

Figure 12 shows a schematic flowchart of a computer-implemented method of identifying salient test runs. The method includes a step S1201 of receiving run receiving multiple sets of run data, each set of run data generated in a driving scenario having an ego agent and at least one challenger agent with the autonomous vehicle system in control of the ego agent. The method includes a step S1202 of generating, for each set of run data, at least one time-indexed event generated responsive to a detected behaviour of the at least one challenger agent. The method includes a step S1203 of generating, for each set of run data, a sequence of decision indicators over multiple time steps of the run data, the decision indicator at each time step indicating whether a predefined driving action by the ego agent would be permissible, each driving indicator generated independently of the autonomous vehicle system in control of the ego agent. The decision indicators are generated by generating a planned trajectory based on a position of the ego agent at a time step to a future time step, the planned trajectory independent of the behaviour of the ego agent between the time step and the future time step, and determining whether the predefined driving action by the ego agent would be permissible by assessing the planned trajectory based on at least one predefined driving action assessment rule. The method also includes a step S1204 of storing the output set in a results database. The method may include further steps as discussed herein with respect to Figures 7-11.

Whilst the above examples consider AV stack testing, the techniques can be applied to test components of other forms of mobile robot. Other mobile robots are being developed, for example for carrying freight supplies in internal and external industrial zones. Such mobile robots would have no people on board and belong to a class of mobile robot termed UAV (unmanned autonomous vehicle). Autonomous air mobile robots (drones) are also being developed.

References herein to components, functions, modules and the like, denote functional components of a computer system which may be implemented at the hardware level in various ways. A computer system comprises execution hardware which may be configured to execute the method/algorithmic steps disclosed herein and/or to implement a model trained using the present techniques. The term execution hardware encompasses any form/combination of hardware configured to execute the relevant method/algorithmic steps. The execution hardware may take the form of one or more processors, which may be programmable or non-programmable, or a combination of programmable and non-programmable hardware may be used. Examples of suitable programmable processors include general purpose processors based on an instruction set architecture, such as CPUs, GPUs/accelerator processors etc. Such general-purpose processors typically execute computer readable instructions held in memory coupled to or internal to the processor and carry out the relevant steps in accordance with those instructions. Other forms of programmable processors include field programmable gate arrays (FPGAs) having a circuit configuration programmable through circuit description code. Examples of non-programmable processors include application specific integrated circuits (ASICs). Code, instructions etc. may be stored as appropriate on transitory or non-transitory media (examples of the latter including solid state, magnetic and optical storage device(s) and the like). The subsystems 102-108 of the runtime stack Figure 1A may be implemented in programmable or dedicated processor(s), or a combination of both, on-board a vehicle or in an off-board computer system in the context of testing and the like. The various components of Figure 2, such as the simulator 202 and the test oracle 252 may be similarly implemented in programmable and/or dedicated hardware.

## Claims

1. A computer system (700) for identifying salient test runs involving an autonomous vehicle system (101) in real or simulated scenarios, the computer system (700) comprising:
a processor configured to:
receive multiple sets of run data (140), each set of run data (140) representative of a driving scenario having an ego agent (801) and at least one challenger agent (802) with the autonomous vehicle system (101) in control of the ego agent (801),
generate, for each set of run data (140), an output set comprising:
at least one time-indexed event generated responsive to a detected behaviour of the at least one challenger agent (802),
a sequence of decision indicators over multiple time steps of the run data (140), the decision indicator at each time step indicating whether a predefined driving action by the ego agent (801) would be permissible, each driving indicator generated independently of the autonomous vehicle system (101) in control of the ego agent (801),
store the output set in a results database (720), and
a data retrieval component (730) coupled to a results database (720) and configured to retrieve a collection of one or more output sets, based on the at least one time-indexed event and the sequence of decision indicators;
wherein the processor is configured to generate the sequence of decision indicators by:
generating a planned trajectory (803) associated with the predefined driving action based on the predefined driving action and a position of the ego agent (801) at a time step to a future time step, the planned trajectory (803) independent of the behaviour of the ego agent (801) between the time step and the future time step, and
determining whether the predefined driving action by the ego agent (801) would be permissible by assessing the planned trajectory (803) based on at least one predefined action assessment rule.

2. The computer system of claim 1, wherein:
the processor is further configured to generate at least one performance result on a predefined driving performance rule applied to the ego agent (801) and include the at least one performance result in the output set.

3. The computer system of claim 1 or 2, comprising:
a visualisation component (520) configured to generate rendering data for causing a display system (522) to display a query graphical user interface, GUI, wherein the query GUI (510) comprises an input configured to receive a user selection of the at least one time-indexed event and the decision indicator; and
wherein the data retrieval component (730) is configured to retrieve the collection of one or more output sets based on the user selection of the at least one time-indexed event and the decision indicator.

4. The computer system (700) of any preceding claim, comprising a visualisation component (520) configured to generate rendering data for causing a display system (522) to display a results GUI (550) comprising the collection of one or more output sets.

5. The computer system (700) of any preceding claim, comprising a visualisation component (520) configured to generate rendering data for causing a display system (522) to display an output set GUI, the output set GUI configured to display a selected output set from the collection of output sets, the output set GUI comprising:
a first time-series display element showing the time-indexed event in the selected output set on a first timeline, and
a second time-series display element showing the permissibility of the driving action represented by the decision indicators in the selected output set on a second timeline.

6. The computer system (700) of claim 5 when dependent upon claim 2, wherein the output set GUI further comprises a third time-series display element showing the at least one performance result on a third timeline.

7. The computer system (700) of any preceding claim, wherein the data retrieval component (730) is configured to retrieve a collection of one or more output sets in which the time-indexed event occurs within a predetermined time range of a decision indicator having a predetermined value.

8. The computer system (700) of claim 7, wherein the time-indexed event occurs simultaneously with the decision indicator having the predetermined value.

9. The computer system (700) of any preceding claim, wherein the at least one time-indexed event comprises one of a cut-in event, a cut-out event and a braking event.

10. The computer system (700) of any preceding claim, wherein the predefined driving action comprises one of a lane change action, a highway merge action, an entry to a roundabout, an unprotected left turn or an unprotected right turn.

11. The computer system (700) of any preceding claim, wherein the data retrieval component (730) is configured to identify a section of a set of the run data (140) comprising the time-indexed event and a decision indicator having a predetermined value.

12. The computer system (700) of any preceding claim, wherein the processor is configured to generate the at least one time-indexed event by applying a plurality of conditions to behaviours of the challenger agent (802) in the run data (140).

13. The computer system (700) of any preceding claim, wherein the predefined action assessment rule forms part of an open-loop rules-based planner (712).

14. The computer system (700) of any preceding claim, wherein the planned trajectory (803) comprises a single future state at the future time step, and the processor is configured to assessing the planned trajectory (803) by assessing the single future state based on the at least one predefined action assessment rule.

15. A computer-implemented method for identifying salient test runs in a real or simulated scenario, comprising:
receiving multiple sets of run data (140), each set of run data (140) generated in a driving scenario having an ego agent (801) and at least one challenger agent (802) with the autonomous vehicle system (101) in control of the ego agent (801),
generating, for each set of run data (140), at least one time-indexed event generated responsive to a detected behaviour of the at least one challenger agent (802);
generating, for each set of run data (140), a sequence of decision indicators over multiple time steps of the run data (140), the decision indicator at each time step indicating whether a predefined driving action by the ego agent (801) would be permissible, each driving indicator generated independently of the autonomous vehicle system (101) in control of the ego agent (801), by:
generating a planned trajectory (803) associated with the predefined driving action based on the predefined driving action and a position of the ego agent (801) at a time step to a future time step, the planned trajectory (803) independent of the behaviour of the ego agent (801) between the time step and the future time step, and
determining whether the predefined driving action by the ego agent (801) would be permissible by assessing the planned trajectory (803) based on at least one predefined driving action assessment rule; and
storing the output set in a results database (720).

16. A non-transitory computer-readable storage medium storing instructions which when executed by a computer (700) carry out the method of claim 15.

## Patentansprüche

1. Computersystem (700) zum Identifizieren auffälliger Testläufe, an denen ein autonomes Fahrzeugsystem (101) in realen oder simulierten Szenarien beteiligt ist, das Computersystem (700) umfassend:
einen Prozessor, der konfiguriert ist zum:
Empfangen mehrerer Sätze von Laufdaten (140), wobei jeder Satz von Laufdaten (140) ein Fahrszenario mit einem Ego-Agenten (801) und mindestens einem Herausforderer-Agenten (802) repräsentiert, wobei das autonome Fahrzeugsystem (101) die Steuerung des Ego-Agenten (801) übernimmt,
Erzeugen, für jeden Satz von Laufdaten (140), eines Ausgabesatzes, umfassend:
mindestens ein zeitindexiertes Ereignis, das als Reaktion auf ein erkanntes Verhalten des mindestens einen Herausforderer-Agenten (802) erzeugt wird,
eine Sequenz von Entscheidungsindikatoren über mehrere Zeitschritte der Laufdaten (140), wobei der Entscheidungsindikator in jedem Zeitschritt angibt, ob eine vordefinierte Fahrhandlung durch den Ego-Agenten (801) zulässig wäre, wobei jeder Fahrindikator unabhängig vom autonomen Fahrzeugsystem (101), das die Steuerung des Ego-Agenten (801) übernimmt, erzeugt wird,
Speichern des Ausgabesatzes in einer Ergebnisdatenbank (720), und
eine Datenabrufkomponente (730), die mit einer Ergebnisdatenbank (720) gekoppelt und so konfiguriert ist, dass sie eine Sammlung von einem oder mehreren Ausgabesätzen auf der Grundlage des mindestens einen zeitindexierten Ereignisses und der Sequenz von Entscheidungsindikatoren abruft;
wobei der Prozessor so konfiguriert ist, dass er die Sequenz von Entscheidungsindikatoren erzeugt, durch:
Erzeugen einer geplanten Trajektorie (803), die mit der vordefinierten Fahrhandlung verbunden ist, basierend auf der vordefinierten Fahrhandlung und einer Position des Ego-Agenten (801) zu einem Zeitschritt zu einem zukünftigen Zeitschritt, wobei die geplante Trajektorie (803) unabhängig vom Verhalten des Ego-Agenten (801) zwischen dem Zeitschritt und dem zukünftigen Zeitschritt ist, und
Bestimmen, ob die vordefinierte Fahrhandlung durch den Ego-Agenten (801) zulässig wäre, indem die geplante Trajektorie (803) auf der Grundlage mindestens einer vordefinierten Handlungsbewertungsregel bewertet wird.

2. Computersystem nach Anspruch 1, wobei:
der Prozessor ferner so konfiguriert ist, dass er mindestens ein Leistungsergebnis zu einer vordefinierten Fahrleistungsregel, die auf den Ego-Agenten (801) angewendet wird, erzeugt und das mindestens eine Leistungsergebnis in den Ausgabesatz einschließt.

3. Computersystem nach Anspruch 1 oder 2, umfassend:
eine Visualisierungskomponente (520), die so konfiguriert ist, dass sie Rendering-Daten erzeugt, um ein Anzeigesystem (522) zu veranlassen, eine grafische Benutzerschnittstelle (GUI) für Abfragen anzuzeigen, wobei die Abfrage-GUI (510) eine Eingabe umfasst, die so konfiguriert ist, dass sie eine Benutzerauswahl des mindestens einen zeitindexierten Ereignisses und den Entscheidungsindikator empfängt; und
wobei die Datenabrufkomponente (730) so konfiguriert ist, dass sie die Sammlung eines oder mehrerer Ausgabesätze auf der Grundlage der Benutzerauswahl des mindestens einen zeitindexierten Ereignisses und des Entscheidungsindikators abruft.

4. Computersystem (700) nach einem der vorstehenden Ansprüche, umfassend eine Visualisierungskomponente (520), die so konfiguriert ist, dass sie Rendering-Daten erzeugt, um ein Anzeigesystem (522) zu veranlassen, eine Ergebnis-GUI (550) anzuzeigen, die die Sammlung eines oder mehrerer Ausgabesätze umfasst.

5. Computersystem (700) nach einem der vorstehenden Ansprüche, umfassend eine Visualisierungskomponente (520), die so konfiguriert ist, dass sie Rendering-Daten erzeugt, um ein Anzeigesystem (522) zu veranlassen, eine Ausgabesatz-GUI anzuzeigen, wobei die Ausgabesatz-GUI so konfiguriert ist, dass sie einen ausgewählten Ausgabesatz aus der Sammlung von Ausgabesätzen anzeigt, die Ausgabesatz-GUI umfassend:
ein erstes Zeitreihen-Anzeigeelement, das das zeitindexierte Ereignis in dem ausgewählten Ausgabesatz auf einer ersten Zeitachse anzeigt, und
ein zweites Zeitreihen-Anzeigeelement, das die Zulässigkeit der durch die Entscheidungsindikatoren in dem ausgewählten Ausgabesatz dargestellten Fahrhandlung auf einer zweiten Zeitachse anzeigt.

6. Computersystem (700) nach Anspruch 5, wenn abhängig von Anspruch 2, wobei die Ausgabesatz-GUI ferner ein drittes Zeitreihen-Anzeigeelement umfasst, das das mindestens eine Leistungsergebnis auf einer dritten Zeitachse anzeigt.

7. Computersystem (700) nach einem der vorstehenden Ansprüche, wobei die Datenabrufkomponente (730) so konfiguriert ist, dass sie eine Sammlung von einem oder mehreren Ausgabesätzen abruft, in denen das zeitindexierte Ereignis innerhalb eines vorbestimmten Zeitbereichs eines Entscheidungsindikators mit einem vorbestimmten Wert auftritt.

8. Computersystem (700) nach Anspruch 7, wobei das zeitindexierte Ereignis gleichzeitig mit dem Entscheidungsindikator mit dem vorbestimmten Wert auftritt.

9. Computersystem (700) nach einem der vorstehenden Ansprüche, wobei das mindestens eine zeitindexierte Ereignis eines von einem Einschaltvorgang, einem Ausschaltvorgang und einem Bremsvorgang umfasst.

10. Computersystem (700) nach einem der vorstehenden Ansprüche, wobei die vordefinierte Fahrhandlung eine Spurwechselhandlung, eine Autobahnauffahrthandlung, eine Einfahrt in einen Kreisverkehr, eine ungeschützte Linksabbiegehandlung oder eine ungeschützte Rechtsabbiegehandlung umfasst.

11. Computersystem (700) nach einem der vorstehenden Ansprüche, wobei die Datenabrufkomponente (730) so konfiguriert ist, dass sie einen Bereich eines Satzes von Laufdaten (140) identifiziert, der das zeitindexierte Ereignis und einen Entscheidungsindikator mit einem vorbestimmten Wert umfasst.

12. Computersystem (700) nach einem der vorstehenden Ansprüche, wobei der Prozessor so konfiguriert ist, dass er das mindestens eine zeitindexierte Ereignis erzeugt, indem er eine Vielzahl von Zuständen auf das Verhalten des Herausforderer-Agenten (802) in den Laufdaten (140) anwendet.

13. Computersystem (700) nach einem der vorstehenden Ansprüche, wobei die vordefinierte Handlungsbewertungsregel Teil eines auf Regeln basierenden Open-Loop-Planers (712) ist.

14. Computersystem (700) nach einem der vorstehenden Ansprüche, wobei die geplante Trajektorie (803) einen einzelnen zukünftigen Zustand zum zukünftigen Zeitschritt umfasst und der Prozessor so konfiguriert ist, dass er die geplante Trajektorie (803) bewertet, indem er den einzelnen zukünftigen Zustand auf der Grundlage der mindestens einen vordefinierten Handlungsbewertungsregel bewertet.

15. Computerimplementiertes Verfahren zum Identifizieren auffälliger Testläufe in einem realen oder simulierten Szenario, umfassend:
Empfangen mehrerer Sätze von Laufdaten (140), wobei jeder Satz von Laufdaten (140) in einem Fahrszenario erzeugt wird, das einen Ego-Agenten (801) und mindestens einen Herausforderer-Agenten (802) aufweist, wobei das autonome Fahrzeugsystem (101) die Steuerung des Ego-Agenten (801) übernimmt,
Erzeugen für jeden Satz von Laufdaten (140) mindestens eines zeitindexierten Ereignisses, das als Reaktion auf ein erkanntes Verhalten des mindestens einen Herausforderer-Agenten (802) erzeugt wird;
Erzeugen einer Sequenz von Entscheidungsindikatoren über mehrere Zeitschritte der Laufdaten (140) für jeden Satz von Laufdaten (140), wobei der Entscheidungsindikator in jedem Zeitschritt angibt, ob eine vordefinierte Fahrhandlung durch den Ego-Agenten (801) zulässig wäre, wobei jeder Fahrindikator unabhängig von dem autonomen Fahrzeugsystem (101), das die Steuerung des Ego-Agenten (801) übernimmt, erzeugt wird, durch:
Erzeugen einer geplanten Trajektorie (803), die mit der vordefinierten Fahrhandlung verbunden ist, basierend auf der vordefinierten Fahrhandlung und einer Position des Ego-Agenten (801) zu einem Zeitschritt zu einem zukünftigen Zeitschritt, wobei die geplante Trajektorie (803) unabhängig vom Verhalten des Ego-Agenten (801) zwischen dem Zeitschritt und dem zukünftigen Zeitschritt ist, und
Bestimmen, ob die vordefinierte Fahrhandlung durch den Ego-Agenten (801) zulässig wäre, indem die geplante Trajektorie (803) auf der Grundlage mindestens einer vordefinierten Fahrhandlungsbewertungsregel bewertet wird; und
Speichern des Ausgabesatzes in einer Ergebnisdatenbank (720) .

16. Nicht-transitorisches, computerlesbares Speicherungsmedium, das Anweisungen speichert, die, wenn sie von einem Computer (700) ausgeführt werden, das Verfahren nach Anspruch 15 ausführen.

## Revendications

1. Système informatique (700) permettant d'identifier les exécutions de test importants impliquant un système de véhicule autonome (101) dans des scénarios réels ou simulés, le système informatique (700) comprenant :
un processeur configuré pour :
recevoir plusieurs ensembles de données d'exécution (140), chaque ensemble de données d'exécution (140) représentant un scénario de conduite ayant un agent égo (801) et au moins un agent challenger (802) avec le système de véhicule autonome (101) contrôlant l'agent égo (801),
générer, pour chaque ensemble de données d'exécution (140), un ensemble de sorties comprenant : au moins un événement indexé dans le temps généré en réponse à un comportement détecté de l'au moins un agent challenger (802),
une séquence d'indicateurs de décision sur plusieurs étapes temporelles des données d'exécution (140), l'indicateur de décision à chaque étape temporelle indiquant si une action de conduite prédéfinie par l'agent égo (801) serait admissible, chaque indicateur de conduite étant généré indépendamment du système de véhicule autonome (101) contrôlant l'agent égo (801),
stocker l'ensemble de sorties dans une base de données de résultats (720), et
un composant de récupération de données (730) couplé à une base de données de résultats (720) et configuré pour récupérer une collection d'un ou plusieurs ensembles de sorties, sur la base de l'au moins un événement indexé dans le temps et de la séquence d'indicateurs de décision ;
dans lequel le processeur est configuré pour générer la séquence d'indicateurs de décision par :
la génération d'une trajectoire planifiée (803) associée à l'action de conduite prédéfinie sur la base de l'action de conduite prédéfinie et d'une position de l'agent égo (801) à une étape temporelle vers une étape temporelle future, la trajectoire planifiée (803) étant indépendante du comportement de l'agent égo (801) entre l'étape temporelle et l'étape temporelle future, et
la détermination de savoir si l'action de conduite prédéfinie par l'agent égo (801) serait admissible en évaluant la trajectoire planifiée (803) sur la base d'au moins une règle d'évaluation d'action prédéfinie.

2. Système informatique selon la revendication 1, dans lequel :
le processeur est en outre configuré pour générer au moins un résultat de performance sur une règle de performance de conduite prédéfinie appliquée à l'agent égo (801) et comporter l'au moins un résultat de performance dans l'ensemble de sorties.

3. Système informatique selon la revendication 1 ou 2, comprenant :
un composant de visualisation (520) configuré pour générer des données de rendu permettant d'amener un système d'affichage (522) à afficher une interface utilisateur graphique de requête, GUI, dans lequel la GUI de requête (510) comprend une entrée configurée pour recevoir une sélection utilisateur de l'au moins un événement indexé dans le temps et de l'indicateur de décision ; et
dans lequel le composant de récupération de données (730) est configuré pour récupérer la collection d'un ou plusieurs ensembles de sorties sur la base de la sélection utilisateur de l'au moins un événement indexé dans le temps et de l'indicateur de décision.

4. Système informatique (700) selon l'une quelconque revendication précédente, comprenant un composant de visualisation (520) configuré pour générer des données de rendu permettant d'amener un système d'affichage (522) à afficher une GUI de résultats (550) comprenant la collection d'un ou plusieurs ensembles de sorties.

5. Système informatique (700) selon l'une quelconque revendication précédente, comprenant un composant de visualisation (520) configuré pour générer des données de rendu permettant d'amener un système d'affichage (522) à afficher une GUI d'ensemble de sorties, la GUI d'ensemble de sorties étant configurée pour afficher un ensemble de sorties sélectionné parmi la collection d'ensembles de sorties, la GUI d'ensemble de sorties comprenant :
un premier élément d'affichage de séries temporelles montrant l'événement indexé dans le temps dans l'ensemble de sorties sélectionné sur une première chronologie, et
un deuxième élément d'affichage de séries temporelles indiquant l'admissibilité de l'action de conduite représentée par les indicateurs de décision dans l'ensemble de sorties sélectionné sur une deuxième chronologie.

6. Système informatique (700) selon la revendication 5 lorsqu'il dépend de la revendication 2, dans lequel la GUI d'ensemble de sorties comprend en outre un troisième élément d'affichage de séries temporelles montrant l'au moins un résultat de performance sur une troisième chronologie.

7. Système informatique (700) selon l'une quelconque revendication précédente, dans lequel le composant de récupération de données (730) est configuré pour récupérer une collection d'un ou plusieurs ensembles de sorties dans lesquels l'événement indexé dans le temps se produit dans une plage de temps prédéterminée d'un indicateur de décision ayant une valeur prédéterminée.

8. Système informatique (700) selon la revendication 7, dans lequel l'événement indexé dans le temps se produit simultanément avec l'indicateur de décision ayant la valeur prédéterminée.

9. Système informatique (700) selon l'une quelconque revendication précédente, dans lequel l'au moins un événement indexé dans le temps comprend l'un parmi un événement de mise en marche, un événement de coupure et un événement de freinage.

10. Système informatique (700) selon l'une quelconque revendication précédente, dans lequel l'action de conduite prédéfinie comprend l'une parmi une action de changement de voie, une action d'insertion sur autoroute, une entrée dans un rond-point, un virage à gauche non protégé ou un virage à droite non protégé.

11. Système informatique (700) selon l'une quelconque revendication précédente, dans lequel le composant de récupération de données (730) est configuré pour identifier une section d'un ensemble de données d'exécution (140) comprenant l'événement indexé dans le temps et un indicateur de décision ayant une valeur prédéterminée.

12. Système informatique (700) selon l'une quelconque revendication précédente, dans lequel le processeur est configuré pour générer l'au moins un événement indexé dans le temps en appliquant une pluralité de conditions aux comportements de l'agent challenger (802) dans les données d'exécution (140).

13. Système informatique (700) selon l'une quelconque revendication précédente, dans lequel la règle d'évaluation d'action prédéfinie fait partie d'un planificateur à base de règles en boucle ouverte (712).

14. Système informatique (700) selon l'une quelconque revendication précédente, dans lequel la trajectoire planifiée (803) comprend un état futur unique à l'étape temporelle future, et le processeur est configuré pour évaluer la trajectoire planifiée (803) en évaluant l'état futur unique sur la base de l'au moins une règle d'évaluation d'action prédéfinie.

15. Procédé implémenté par ordinateur permettant d'identifier des exécutions de test importantes dans un scénario réel ou simulé, comprenant :
la réception de plusieurs ensembles de données d'exécution (140), chaque ensemble de données d'exécution (140) étant généré dans un scénario de conduite ayant un agent égo (801) et au moins un agent challenger (802) avec le système de véhicule autonome (101) contrôlant l'agent égo (801),
la génération, pour chaque ensemble de données d'exécution (140), d'au moins un événement indexé dans le temps généré en réponse à un comportement détecté de l'au moins un agent challenger (802) ;
la génération, pour chaque ensemble de données d'exécution (140), d'une séquence d'indicateurs de décision sur plusieurs étapes temporelles des données d'exécution (140), l'indicateur de décision à chaque étape temporelle indiquant si une action de conduite prédéfinie par l'agent égo (801) serait admissible,
chaque indicateur de conduite étant généré indépendamment du système de véhicule autonome (101) contrôlant l'agent égo (801), par :
la génération d'une trajectoire planifiée (803) associée à l'action de conduite prédéfinie sur la base de l'action de conduite prédéfinie et d'une position de l'agent égo (801) à une étape temporelle vers une étape temporelle future, la trajectoire planifiée (803) étant indépendante du comportement de l'agent égo (801) entre l'étape temporelle et l'étape temporelle future, et
la détermination de savoir si l'action de conduite prédéfinie par l'agent égo (801) serait admissible en évaluant la trajectoire planifiée (803) sur la base d'au moins une règle d'évaluation d'action de conduite prédéfinie ; et
le stockage de l'ensemble de sorties dans une base de données de résultats (720).

16. Support de stockage lisible par ordinateur non transitoire stockant des instructions qui lorsqu'elles sont exécutées par un ordinateur (700) exécutent le procédé selon la revendication 15.
